# EUROPEAN PATENT APPLICATION

(11) **EP 4 832 548 A1**
(43) Date of publication of application: **28.10.2026**
(21) Application number: 24906275.3
(22) Date of filing: 16.12.2024
(51) Int. Cl.: H04W 24/02

(54) **OPERATION EXECUTION METHOD, APPARATUS, COMMUNICATION DEVICE AND READABLE STORAGE MEDIUM**

(30) Priority: 22.12.2023 CN 202311784189
(71) Applicant: Vivo Mobile Communication Co., Ltd., Dongguan, Guangdong 523863 (CN)
(72) Inventor: KE, Xiaowan, Dongguan, Guangdong 523863 (CN)
(74) Representative: Walaski, Jan Filip
(86) International application number: PCT/CN2024/139448
(87) International publication number: WO 2025/130794

(57) **Abstract**

This application relates to the field of wireless communication technologies, and discloses an operation execution method and apparatus, a communication device, and a readable storage medium. The operation execution method in embodiments of this application includes: A first communication device obtains first information, where the first information includes at least one of the following: matching information, a first identifier, and a second identifier. The first communication device executes a first operation based on the first information, where the first operation includes at least one of the following: selecting one or more ambient Internet of Things AIoT devices; discovering one or more AIoT devices; and sending second information. The second information includes at least one of the following: matching information, a first identifier, and a second identifier. The matching information is used for selecting or matching one or more AIoT devices. The first identifier is used for identifying one or more AIoT devices. The second identifier is used for identifying at least one of the following: one or more tasks, one or more sessions, and one or more processes.

## Description

### CROSS-REFERENCE TO RELATED APPLICATIONS

This application claims priority to Chinese Patent Application No. 202311784189.3 filed in China on December 22, 2023, which is incorporated herein by reference in its entirety.

### TECHNICAL FIELD

This application relates to the field of wireless communication technologies, and specifically, relates to an operation execution method and apparatus, a communication device, and a readable storage medium.

### BACKGROUND

Ambient Internet of Things (Ambient Internet of Things, AIoT), also referred to as ambient power-enabled Internet of Things (Ambient power-enabled Internet of Things, Ambient power-enabled IoT), is a type of IoT service. AIoT devices are low power IoT devices, which feature low overall power consumption, covering both low power signal reception and low power signal transmission. Thanks to low overall power consumption, energy required for communication may be harvested from the ambient environment, such as wind energy, kinetic energy, thermal energy, and radio frequency (Radio Frequency, RF) signals. AIoT devices may also be expressed as passive (passive) IoT devices or responder devices.

AIoT tasks shall support operations such as inventorying, read, write, and killing on selected specific AIoT devices. Due to the massive deployment of AIoT devices and the large quantity of selected AIoT devices, it is still unclear in mobile communication networks how to select one or more AIoT devices from a large quantity of AIoT devices. Therefore, how to implement operations on one or more AIoT devices is a technical problem that needs to be resolved

### SUMMARY

Embodiments of this application provide an operation execution method, a processing apparatus, a communication device, and a readable storage medium, to resolve a problem about how to implement operations on one or more AIoT devices.

According to a first aspect, an operation execution method is provided, including:
obtaining, by a first communication device, first information, where the first information includes at least one of the following: matching information, a first identifier, and a second identifier;
executing, by the first communication device, a first operation based on the first information,
where the first operation includes at least one of the following:
   selecting one or more ambient Internet of Things AIoT devices;
   discovering one or more AIoT devices;
   sending second information,
   where
   the second information includes at least one of the following: the matching information, the first identifier, and the second identifier,
   where
   the matching information is used for selecting or matching one or more AIoT devices;
   the first identifier is used for identifying one or more AIoT devices; and
   the second identifier is used for identifying at least one of the following: one or more tasks, one or more sessions, and one or more processes.

According to a second aspect, an operation execution method is provided, including:
receiving, by a second communication device, second information, where the second information includes at least one of the following: matching information, a first identifier, and a second identifier; and
executing, by the second communication device, a second operation based on the second information,
where the second operation includes at least one of the following:
   performing matching with the second information;
   executing or skipping executing an AIoT service-related operation based on a success or a failure of matching with the second information; and
   sending or skipping sending a first response based on a success or a failure of the matching with the second information,
   where
   the matching information is used for selecting or matching one or more AIoT devices;
   the first identifier is used for identifying one or more AIoT devices; and
   the second identifier is used for identifying at least one of the following: one or more tasks, one or more sessions, and one or more processes.

According to a third aspect, an operation execution method is provided, including:
executing, by a third communication device, a third operation,
where the third operation includes at least one of the following:
   allocating a second identifier; and
   sending at least one of the following: matching information, a first identifier, and a second identifier,
   where
   the matching information is used for selecting or matching one or more AIoT devices;
   the first identifier is used for identifying one or more AIoT devices; and
   the second identifier is used for identifying at least one of the following: one or more tasks, one or more sessions, and one or more processes.

According to a fourth aspect, an operation execution method is provided, including:
executing, by a fourth communication device, a fourth operation, where the fourth operation includes at least one of the following:
sending fourth information, where the fourth information includes at least one of the following: matching information, a first identifier, a second identifier, and AIoT task information,
where
the matching information is used for selecting or matching one or more AIoT devices;
the first identifier is used for identifying one or more AIoT devices; and
the second identifier is used for identifying at least one of the following: one or more tasks, one or more sessions, and one or more processes.

According to a fifth aspect, an operation execution method is provided, including:
executing, by a fifth communication, a fifth operation,
where the fifth operation includes at least one of the following:
   carrying first indication information in a first message, where the first indication information is used for indicating at least one of the following: ignoring a terminal identifier in the first message; and
   sending first information,
   where
   the first information includes at least one of the following: matching information, a first identifier, and a second identifier,
   where
   the matching information is used for selecting or matching one or more AIoT devices;
   the first identifier is used for identifying one or more AIoT devices; and
   the second identifier is used for identifying at least one of the following: one or more tasks, one or more sessions, and one or more processes.

According to a sixth aspect, an operation execution method is provided, including:
receiving, by a sixth communication device, first indication information, where the first indication information is used for indicating at least one of the following: ignoring a terminal identifier in the first message; and
executing, by the sixth communication device, a sixth operation based on the first indication information,
where the sixth operation includes at least one of the following:
   ignoring the terminal identifier in the first message;
   configuring a second message not to include a terminal identifier; and
   configuring the second message to include received second indication information, where the second indication information is used for indicating at least one of the following: ignoring a terminal identifier in the second message.

According to a seventh aspect, an operation execution apparatus is provided, including:
an obtaining module, configured to obtain first information, where the first information includes at least one of the following: matching information, a first identifier, and a second identifier; and
a first execution module, configured to execute a first operation based on the first information,
where the first operation includes at least one of the following:
   selecting one or more ambient Internet of Things AIoT devices;
   discovering one or more AIoT devices; and
   sending second information,
   where
   the second information includes at least one of the following: the matching information, the first identifier, and the second identifier,
   where
   the matching information is used for selecting or matching one or more AIoT devices;
   the first identifier is used for identifying one or more AIoT devices; and
   the second identifier is used for identifying at least one of the following: one or more tasks, one or more sessions, and one or more processes.

According to an eighth aspect, an operation execution apparatus is provided, including:
a first receiving module, configured to receive second information, where the second information includes at least one of the following: matching information, a first identifier, and a second identifier; and
a second execution module, configured to execute a second operation based on the second information,
where the second operation includes at least one of the following:
   performing matching with the second information;
   executing or skipping executing an AIoT service-related operation based on a success or a failure of matching with the second information; and
   sending or skipping sending a first response based on a success or a failure of the matching with the second information,
   where
   the matching information is used for selecting or matching one or more AIoT devices;
   the first identifier is used for identifying one or more AIoT devices; and
   the second identifier is used for identifying at least one of the following: one or more tasks, one or more sessions, and one or more processes.

According to a ninth aspect, an operation execution apparatus is provided, including:
a third execution module, configured to execute a third operation,
where the third operation includes at least one of the following:
   allocating a second identifier; and
   sending at least one of the following: matching information, a first identifier, and a second identifier,
   where
   the matching information is used for selecting or matching one or more AIoT devices;
   the first identifier is used for identifying one or more AIoT devices; and
   the second identifier is used for identifying at least one of the following: one or more tasks, one or more sessions, and one or more processes.

According to a tenth aspect, an operation execution apparatus is provided, including:
a fourth execution module, configured to execute a fourth operation, where the fourth operation includes at least one of the following:
sending fourth information, where the fourth information includes at least one of the following: matching information, a first identifier, a second identifier, and AIoT task information,
where
the matching information is used for selecting or matching one or more AIoT devices;
the first identifier is used for identifying one or more AIoT devices; and
the second identifier is used for identifying at least one of the following: one or more tasks, one or more sessions, and one or more processes.

According to an eleventh aspect, an operation execution apparatus is provided, including:
a fifth execution module, configured to execute a fifth operation,
where the fifth operation includes at least one of the following:
   carrying first indication information in a first message, where the first indication information is used for indicating at least one of the following: ignoring a terminal identifier in the first message; and
   sending first information,
   where
   the first information includes at least one of the following: matching information, a first identifier, and a second identifier,
   where
   the matching information is used for selecting or matching one or more AIoT devices;
   the first identifier is used for identifying one or more AIoT devices; and
   the second identifier is used for identifying at least one of the following: one or more tasks, one or more sessions, and one or more processes.

According to a twelfth aspect, an operation execution apparatus is provided, including:
a second receiving module, configured to receive first indication information, where the first indication information is used for indicating at least one of the following: ignoring a terminal identifier in the first message; and
a sixth execution module, configured to execute a sixth operation based on the first indication information,
where the sixth operation includes at least one of the following:
   ignoring the terminal identifier in the first message;
   configuring a second message not to include a terminal identifier; and
   configuring the second message to include received second indication information, where the second indication information is used for indicating at least one of the following: ignoring a terminal identifier in the second message.

According to a thirteenth aspect, a communication device is provided. The terminal includes a processor and a memory. The memory stores a program or an instruction runnable on the processor. The program or the instruction, when executed by the processor, implements the steps of the method described in the first aspect, the second aspect, the third aspect, the fourth aspect, the fifth aspect, the sixth aspect, or the seventh aspect.

According to a fourteenth aspect, a communication device is provided, including a processor and a communication interface. The processor is configured to:
obtain first information, where the first information includes at least one of the following: matching information, a first identifier, and a second identifier; and
execute a first operation based on the first information,
where the first operation includes at least one of the following:
   selecting one or more ambient Internet of Things AIoT devices;
   discovering one or more AIoT devices;
   sending second information,
   where
   the second information includes at least one of the following: the matching information, the first identifier, and the second identifier,
   where
   the matching information is used for selecting or matching one or more AIoT devices;
   the first identifier is used for identifying one or more AIoT devices; and
   the second identifier is used for identifying at least one of the following: one or more tasks, one or more sessions, and one or more processes.

According to a fifteenth aspect, a communication device is provided, including a processor and a communication interface, where the processor is configured to:
receive second information, where the second information includes at least one of the following: matching information, a first identifier, and a second identifier; and
execute a second operation based on the second information,
where the second operation includes at least one of the following:
   performing matching with the second information;
   executing or skipping executing an AIoT service-related operation based on a success or a failure of matching with the second information; and
   sending or skipping sending a first response based on a success or a failure of the matching with the second information,
   where
   the matching information is used for selecting or matching one or more AIoT devices;
   the first identifier is used for identifying one or more AIoT devices; and
   the second identifier is used for identifying at least one of the following: one or more tasks, one or more sessions, and one or more processes.

According to a sixteenth aspect, a communication device is provided, including a processor and a communication interface, where the processor is configured to:
execute a third operation,
where the third operation includes at least one of the following:
   allocating a second identifier; and
   sending at least one of the following: matching information, a first identifier, and a second identifier,
   where
   the matching information is used for selecting or matching one or more AIoT devices;
   the first identifier is used for identifying one or more AIoT devices; and
   the second identifier is used for identifying at least one of the following: one or more tasks, one or more sessions, and one or more processes.

According to a seventeenth aspect, a communication device is provided, including a processor and a communication interface, where the processor is configured to:
execute a fourth operation, where the fourth operation includes at least one of the following:
sending fourth information, where the fourth information includes at least one of the following: matching information, a first identifier, a second identifier, and AIoT task information,
where
the matching information is used for selecting or matching one or more AIoT devices;
the first identifier is used for identifying one or more AIoT devices; and
the second identifier is used for identifying at least one of the following: one or more tasks, one or more sessions, and one or more processes.

According to an eighteenth aspect, a communication device is provided, including a processor and a communication interface, where the processor is configured to:
execute a fifth operation,

where the fifth operation includes at least one of the following:
carrying first indication information in a first message, where the first indication information is used for indicating at least one of the following: ignoring a terminal identifier in the first message; and
sending first information,
where
the first information includes at least one of the following: matching information, a first identifier, and a second identifier,
where
the matching information is used for selecting or matching one or more AIoT devices;
the first identifier is used for identifying one or more AIoT devices; and
the second identifier is used for identifying at least one of the following: one or more tasks, one or more sessions, and one or more processes.

According to a nineteenth aspect, a communication device is provided, including a processor and a communication interface. The processor is configured to:
receive first indication information, where the first indication information is used for indicating at least one of the following: ignoring a terminal identifier in the first message;
execute a sixth operation based on the first indication information,
where the sixth operation includes at least one of the following:
   ignoring the terminal identifier in the first message;
   configuring a second message not to include a terminal identifier; and
   configuring the second message to include received second indication information, where the second indication information is used for indicating at least one of the following: ignoring a terminal identifier in the second message.

According to a twentieth aspect, a readable storage medium is provided. The readable storage medium stores a program or an instruction. The program or the instruction, when executed by a processor, implements the steps of the method described in the first aspect, the second aspect, the third aspect, the fourth aspect, the fifth aspect, or the sixth aspect.

According to a twenty-first aspect, a wireless communication system is provided, including a first communication device, a second communication device, a third communication device, a fourth communication device, a fifth communication device, and a sixth communication device. The first communication device may be configured to perform the steps of the method described in the first aspect. The second communication device may be configured to perform the steps of the method described in the second aspect. The third communication device may be configured to perform the steps of the method described in the third aspect. The fourth communication device may be configured to perform the steps of the method described in the fourth aspect. The fifth communication device may be configured to perform the steps of the method described in the fifth aspect. The sixth communication device may be configured to perform the steps of the method described in the sixth aspect.

According to a twenty-second aspect, a wireless communication system is provided, including a first communication device, a second communication device, a third communication device, a fourth communication device, a fifth communication device, and a sixth communication device. The first communication device may be configured to perform the steps of the method described in the first aspect. The second communication device may be configured to perform the steps of the method described in the second aspect. The third communication device may be configured to perform the steps of the method described in the third aspect. The fourth communication device may be configured to perform the steps of the method described in the fourth aspect. The fifth communication device may be configured to perform the steps of the method described in the fifth aspect. The sixth communication device may be configured to perform the steps of the method described in the sixth aspect.

According to a twenty-third aspect, a chip is provided. The chip includes a processor and a communication interface. The communication interface is coupled to the processor. The processor is configured to run a program or an instruction, to implement the method described in the first aspect, the second aspect, the third aspect, the fourth aspect, the fifth aspect, or the sixth aspect.

According to a twenty-third aspect, a computer program/program product is provided. The computer program/program product is stored in a storage medium. The program/program product is executed by at least one processor to implement the steps of the method described in the first aspect, the second aspect, the third aspect, the fourth aspect, the fifth aspect, or the sixth aspect.

In embodiments of this application, operations may be implemented on one or more AIoT devices through the first operation, the second operation, the third operation, the fourth operation, the fifth operation, or the sixth operation. Further, embodiments of this application can select one or more AIoT devices and support efficient group-based selection of one or more AIoT devices. Further, embodiments of this application can reuse existing messages (such as paging messages or notification messages) to select one or more AIoT devices, and can implement exception processing that is to be performed due to the reuse of existing messages.

### BRIEF DESCRIPTION OF THE DRAWINGS

FIG. 1a is a first block diagram of a wireless communication system to which an embodiment of this application may be applied;
FIG. 1b is a second block diagram of a wireless communication system to which an embodiment of this application may be applied;
FIG. 1c is a third block diagram of a wireless communication system to which an embodiment of this application may be applied;
FIG. 1d is a fourth block diagram of a wireless communication system to which an embodiment of this application may be applied;
FIG. 1e is a fifth block diagram of a wireless communication system to which an embodiment of this application may be applied;
FIG. 1f is a sixth block diagram of a wireless communication system to which an embodiment of this application may be applied;
FIG. 2 is a first schematic flowchart of an operation execution method according to an embodiment of this application;
FIG. 3 is a second schematic flowchart of an operation execution method according to an embodiment of this application;
FIG. 4 is a third schematic flowchart of an operation execution method according to an embodiment of this application;
FIG. 5 is a fourth schematic flowchart of an operation execution method according to an embodiment of this application;
FIG. 6 is a fifth schematic flowchart of an operation execution method according to an embodiment of this application;
FIG. 7 is a sixth schematic flowchart of an operation execution method according to an embodiment of this application;
FIG. 8 is a schematic flowchart of an operation execution method according to Embodiment 1 of this application;
FIG. 9 is a schematic flowchart of an operation execution method according to Embodiment 2 of this application;
FIG. 10 is a schematic flowchart of an operation execution method according to Embodiment 3 of this application;
FIG. 11 is a first schematic structural diagram of an operation execution apparatus according to an embodiment of this application;
FIG. 12 is a second schematic structural diagram of an operation execution apparatus according to an embodiment of this application;
FIG. 13 is a third schematic structural diagram of an operation execution apparatus according to an embodiment of this application;
FIG. 14 is a fourth schematic structural diagram of an operation execution apparatus according to an embodiment of this application;
FIG. 15 is a fifth schematic structural diagram of an operation execution apparatus according to an embodiment of this application;
FIG. 16 is a sixth schematic structural diagram of an operation execution apparatus according to an embodiment of this application;
FIG. 17 is a first schematic structural diagram of a communication device according to an embodiment of this application;
FIG. 18 is a first schematic diagram of a hardware structure of a network side device according to an embodiment of this application; and
FIG. 19 is a second schematic diagram of a hardware structure of a network side device according to an embodiment of this application.

### DETAILED DESCRIPTION

Technical solutions in embodiments of this application are clearly described below with reference to drawings in embodiments of this application. Apparently, the described embodiments are merely some rather than all embodiments of this application. All other embodiments obtained by a person skilled in the art based on embodiments of this application fall within the protection scope of this application.

The terms "first", "second", and the like in this application are used for distinguishing between similar objects, rather than describing a specific sequence or order. It should be understood that the terms used in this way may be transposed where appropriate, so that embodiments of this application may be implemented in a sequence other than those illustrated or described herein. In addition, objects defined by "first" and "second" are generally of the same class and do not limit a quantity of objects. For example, one or more first objects may be arranged. In addition, the term "or" in this application denotes at least one of the connected objects. For example, "A or B" includes three solutions, namely, solution 1: including A but excluding B; solution 2: including B but excluding A; and solution 3: including both A and B. The character "/" generally indicates that associated objects are in an "or" relationship.

In this application, the term "indication" may be a direct indication (or referred to as an explicit indication) or an indirect indication (or referred to as an implicit indication). The direct indication may be understood as that a sending party explicitly notifies a receiving party of content such as specific information, an operation that needs to be executed, or a request result in the indication that is sent. The indirect indication may be understood as that a receiving party determines corresponding information based on an indication sent by a sending party, or performs determining and determines an operation that needs to be executed or a request result based on a determining result.

It should be noted that the technology described in embodiments of this application may be applied to a long term evolution (Long Term Evolution, LTE)/LTE-advanced (LTE-Advanced, LTE-A) system, and may be further applied to another wireless communication system, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA) system, or another system. The terms "system" and "network" in embodiments of this application are usually used interchangeably, and the described technology may be applied to the systems and radio technologies mentioned above, and may be further applied to other systems and radio technologies. A new radio (New Radio, NR) system is described below for an illustrative purpose, and the term NR is used in most of the following descriptions, but the technologies may also be applied to systems other than the NR system, such as a 6^{th} Generation (6^{th} Generation, 6G) communication system.

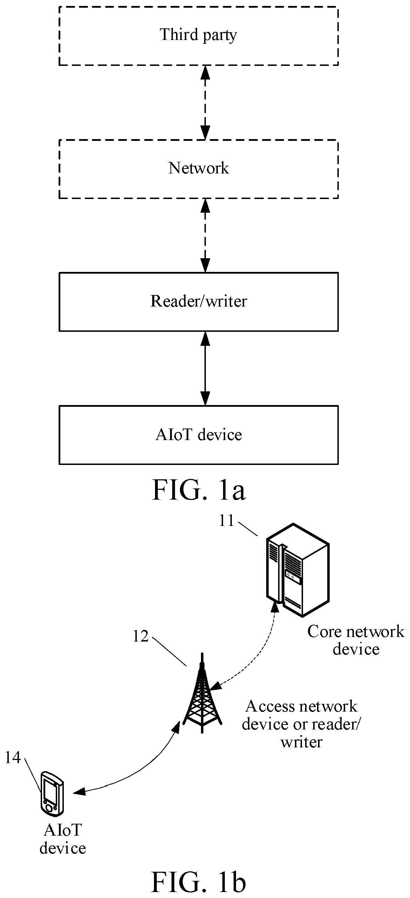

Question 1: Application scenarios of an ambient Internet of Things AIoT device in a mobile communication network. A third-party application may invoke services provided by the network to request a reader/writer/interrogator in the network to execute operations (such as inventorying, read, write, and killing) on a group of AIoT devices, as shown in FIG. 1a (the reader/writer/interrogator may be a part of the network). Matching rules for AIoT device groups designed by different third-party applications may vary, and current agents of third-party applications (for example, an application function (Application Function, AF)) do not support providing the matching rules for AIoT device groups to a core network device. Meanwhile, the core network cannot provide the matching rules for AIoT device groups to the reader/writer/interrogator. As a result, selecting a group of AIoT devices is not currently supported. How to support selecting a group of AIoT devices is a problem that needs to be resolved.

Question 2: In an existing network, a core network (Core Network, CN) triggers, by using a paging (Paging) message, paging of a user equipment (User Equipment, UE) to a radio access network (radio access network, RAN). The paging message includes identifiers of one or more to-be-paged UEs, as well as a paging area and a paging interval. However, the paging message supports neither the matching rules for AIoT device groups mentioned in Question 1 nor using a single group identifier to identify a group of AIoT devices. Compared with paging of a plurality of UEs, which requires providing a plurality of UE identifiers, the single group identifier can be shared by the AIoT devices. Paging AIoT devices based on a single group identifier is currently not supported, and the UE ID, which is a mandatory information element (Information element, IE) in paging, cannot be used for selecting AIoT devices. How to support paging of AIoT devices based on a single group identifier and how to process the UE ID in the paging message are problems that need to be resolved.

Question 3: During selection of AIoT devices, there is a possibility that a plurality of readers/writers/interrogators execute the same task concurrently. How to process executing, by a second reader/writer/interrogator, the same task of selecting AIoT devices after a first reader/writer/interrogator completes the selection is a problem that needs to be resolved. In addition, after the AIoT devices are selected, read/write operations need to be executed. How to process subsequent or next-step signaling (for example, read/write operation instructions) for AIoT devices that do not satisfy the matching rules is a problem that needs to be resolved.

FIG. 1a to FIG. 1f are block diagrams of wireless communication systems to which an embodiment of this application may be applied.

As shown in FIG. 1a, a wireless communication system to which an embodiment of this application may be applied includes an AIoT device, a reader/writer, a network (optional), and a third party (optional). To execute an AIoT task (for example, inventorying), the reader/writer and the AIoT device need to interact.

In some scenarios, the network and the third party participate in the AIoT task. In some other scenarios, the third party participates in the AIoT task. In some other scenarios, the network does not participate in the AIoT task. The network may be further partitioned into a core network device and an access network device.

The reader/writer device may also be referred to as an interrogator device, for example, a terminal, a relay device, or an Integrated Access Backhaul (Integrated Access Backhaul, IAB) device. The AIoT device is a device that can reply to the AIoT task. As shown in FIG. 1a, the reader/writer device can directly communicate with the AIoT device without an intermediate device. The radio access network device may perform radio resource control for the reader/writer device.

As shown in FIG. 1b, a wireless communication system to which an embodiment of this application may be applied includes a core network device 11, an access network device 12 (or a reader/writer), and an AIoT device 14. The access network device may take a role of a reader/writer. In some scenarios, the core network device participates, and in some other scenarios, the core network device does not participate.

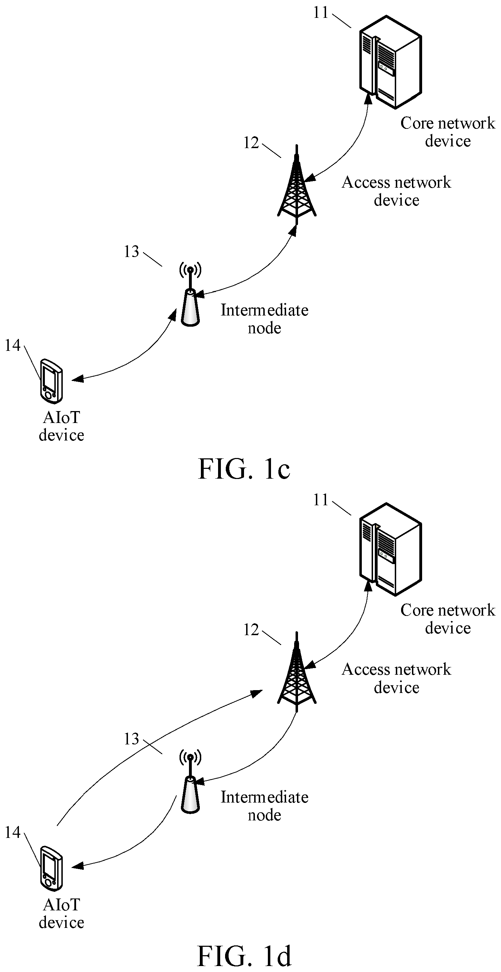

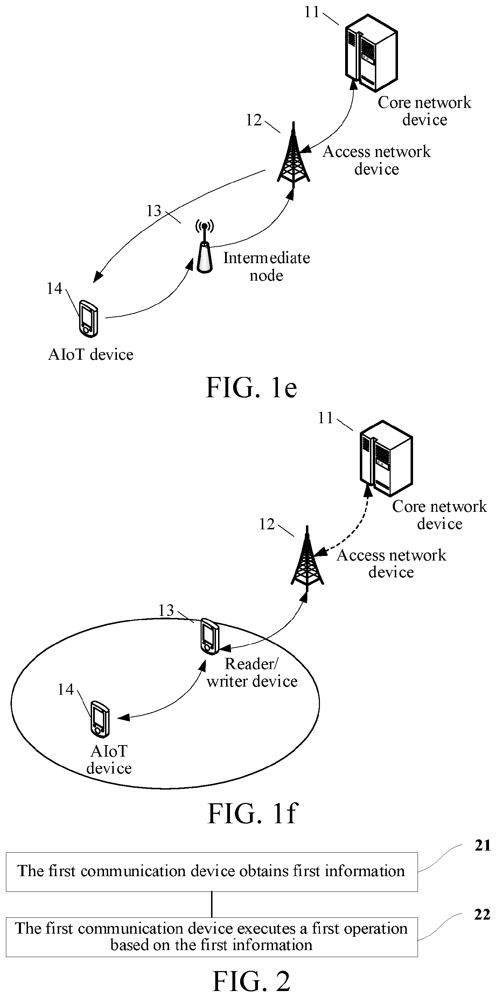

As shown in FIG. 1c, FIG. 1d, and FIG. 1e, a wireless communication system to which an embodiment of this application may be applied includes a core network device 11, an access network device 12, an intermediate node 13, and an AIoT device 14. The access network device may take a role of a reader/writer. The intermediate node is responsible for relaying communication between the access network device and the AIoT device. In some scenarios, the core network device participates, and in some other scenarios, the core network device does not participate.

In FIG. 1c, the core network device 11 transmits information to the AIoT device 14 according to a path "core network device>access network device>intermediate node>AIoT device". The AIoT device 14 transmits information to the core network device 11 according to a path "AIoT device>intermediate node>access network device>core network device". In FIG. 1d, the core network device 11 transmits information to the AIoT device 14 according to a path "core network device>access network device>intermediate node>AIoT device". The AIoT device 14 transmits information to the core network device 11 according to a path "AIoT device>access network device>core network device".

In FIG. 1e, the core network device 11 transmits information to the AIoT device 14 according to a path "core network device>access network device>AIoT device". The AIoT device 14 transmits information to the core network device 11 according to a path "AIoT device>intermediate node>access network device>core network device".

As shown in FIG. 1f, a wireless communication system to which an embodiment of this application may be applied includes a core network device 11 (optional), an access network device 12, a reader/writer 13, and an AIoT device 14. A UE may take a role of a reader/writer. The intermediate node is responsible for relaying communication between the access network device and the AIoT device. In some scenarios, the core network device participates, and in some other scenarios, the core network device does not participate.

The AIoT device or the reader/writer may be a terminal.

The terminal may be a terminal side device such as a mobile phone, a tablet computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile Internet device (Mobile Internet Device, MID), an augmented reality (Augmented Reality, AR)/virtual reality (Virtual Reality, VR) device, a robot, a wearable device (Wearable Device), an aircraft (flight vehicle), a vehicle-mounted device (Vehicle User Equipment, VUE), a ship-borne device, a pedestrian terminal (Pedestrian User Equipment, PUE), a smart home appliance (a home device having a wireless communication function, such as a refrigerator, a television, a washing machine, or furniture), a game console, a personal computer (Personal Computer, PC), a teller machine, or a self-service machine. The wearable device includes a smart watch, a smart band, a smart earphone, smart glasses, smart jewelry (a smart bracelet, a smart chain, a smart ring, a smart necklace, a smart anklet, a smart ankle chain, or the like), a smart wristband, smart clothing, or the like. The vehicle-mounted device may also be referred to as a vehicle-mounted terminal, a vehicle-mounted controller, a vehicle-mounted module, a vehicle-mounted component, a vehicle-mounted chip, a vehicle-mounted unit, an AIoT device, a reader/writer, or the like. It should be noted that, a specific type of the terminal is not limited in embodiments of this application.

A network device may include an access network device or a core network device.

The access network device 12 may also be referred to as a radio access network (Radio Access Network, RAN) device, a radio access network function, or a radio access network unit. The access network device may include a base station, a wireless local area network (Wireless Local Area Network, WLAN) access point (Access Point, AS), a wireless fidelity (Wireless Fidelity, Wi-Fi) node, or the like. The base station may be referred to as a NodeB (Node B, NB), an evolved NodeB (Evolved Node B, eNB), a next generation NodeB (the next generation Node B, gNB), a new radio NodeB (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home Node B, HNB), a home evolved NodeB (home evolved Node B), a transmission reception point (Transmission Reception Point, TRP), a reader/writer, or another appropriate term in the art. The base station is not limited to a specific technical term, provided that the same technical effects are achieved. It should be noted that, in embodiments of this application, only a base station in the NR system is used as an example, and a specific type of the base station is not limited.

The core network device 11 may include but is not limited to at least one of a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), an AIoT function, and the like. It should be noted that, in embodiments of this application, only a core network device in the NR system is used as an example, but a specific type of the core network device is not limited.

In an optional embodiment of this application, the AIoT function may also be referred to as an AIoT management and/or control network function. The AIoT function includes but is not limited to at least one of the following:
managing and controlling an AIoT task, an AIoT session, and an AIoT process;
generating a corresponding AIoT task based on an AIoT service request;
establishing an AIoT session or process to control an AIoT task;
distributing the AIoT task to a reader/writer (directly sending the AIoT task or forwarding the AIoT task by using another network element);
receiving an AIoT task execution result;
summarizing the AIoT task execution result; and
announcing the AIoT task execution result to a third party.

In an implementation, the AIoT service request may be used for requesting an AIoT service.

In an implementation, the AIoT function may be an independent network function or an existing network function (such as an AMF (for example, an AMF supporting the AIoT function) or an NEF (for example, an NEF supporting the AIoT function)).

In an optional embodiment of this application, the session includes an AIoT session.

In an optional embodiment of this application, the task includes an AIoT task.

In an optional embodiment of this application, the process includes an AIoT task process.

In an implementation, the AIoT session is a session corresponding to an AIoT task.

In an implementation, the AIoT session is a process corresponding to an AIoT task. Therefore, the AIoT session may be embodied as an AIoT task or a process corresponding to an AIoT task.

In an optional embodiment of this application, the AIoT service is also referred to as an AIoT service. The AIoT service includes at least one of the following:
a service of inventorying or discovering (or paging) one or more AIoT devices;
a service of reading information of the one or more AIoT devices (information in an AIoT storage (for example, identification information or perceived information of the AIoT devices));
a service of writing information to the one or more AIoT devices;
a service of controlling the one or more AIoT devices (for example, activating and deactivating the AIoT devices); and
a service of positioning the one or more AIoT devices.

In an optional embodiment of this application, the AIoT task is also referred to as an AIoT operation.

The AIoT task or the AIoT operation includes at least one of the following:
inventorying or discovering (or paging) one or more AIoT devices;
reading information of the one or more AIoT devices (information in an AIoT storage (for example, identification information or perceived information of the AIoT devices));
writing information to the one or more AIoT devices;
controlling the one or more AIoT devices (for example, activating and deactivating the AIoT devices); and
positioning the one or more AIoT devices.

In another implementation, the AIoT operation may include at least one of the following:
an inventorying or discovering operation;
a read operation;
a write operation;
a control operation (for example, activating an AIoT device or deactivating an AIoT device (or killing or deserving an AIoT device)); and
a positioning (or object finding) operation.

In an optional embodiment of this application, deactivating an AIoT device means disabling an RF capability of the AIoT device.

In an optional embodiment of this application, the reader/writer may also be referred to as one of the following: a read/write device, an AIoT service terminal, an interrogator, a reader, a querier, a communicator, a scanner, a programmer, a private apparatus, a portable reader, an automatic device recognition device, and the like.

In an optional embodiment of this application, the reader/writer may be a terminal (such as a UE), an access network device, or a device having a read/write function. A device having a reader/writer function includes but is not limited to one of the following: a UE having a reader/writer function and an access network device having a reader/writer function.

In an optional embodiment of this application, the reader/writer may be a device having one of the following features:
- a device communicating with an AIoT device, or a device communicating with an AIoT device based on a first interface;
- an access device for an AIoT device to connect to a wireless communication system;
- a device supporting the first interface; and
- a device supporting a first RAT.

In an implementation, the read/write device is a handheld or fixed device that reads (sometimes, may further write) tag information. This is an original definition. The read/write device may alternatively be understood as a device for communication with tags, such as a terminal or a base station, or may be understood a device having read/write functions, such as a reader/writer. This is not specifically limited herein.

In an optional embodiment of this application, the first interface is a wireless interface between a reader/writer and an AIoT device. In an implementation, the first interface may be different from a Uu interface or a PC5 interface. In another implementation, the first interface may be an enhanced version of a Uu interface or an enhanced version of a PC5 interface.

In an optional embodiment of this application, communicating with an AIoT device includes at least one of the following:
- selecting or discovering (or paging) an AIoT device;
- reading information of the AIoT device;
- writing information to the AIoT device;
- controlling the AIoT device (for example, activating or deactivating the AIoT device); and
- positioning the AIoT device.

In an optional embodiment of this application, the first RAT may be a RAT used for AIoT, and the first RAN may be different from existing RATs such as NB IOT, 2G, 3G, 4G, or 5G.

The reader/writer may directly communicate with the AIoT device, or communicate with the AIoT device through an intermediate device. For a reader/writer far away from the AIoT device, the reader/writer may extend its coverage through an intermediate device. In this case, the intermediate device is also referred to as a reader/writer or as a component of the reader/writer.

In an implementation, the intermediate device may be an intermediate node located between the AIoT device 11 and another device (such as an access network device or a reader/writer), but is not limited thereto. The intermediate device can extend coverage of the another device or assist communication between the AIoT device 11 and the another network device (such as an access network device or a reader/writer), but is not limited thereto.

The AIoT device is also referred to as a terminal of an AIoT service (which may be referred to as an AIoT terminal for short). In a broad sense, terminals also include AIoT devices. Alternatively, AIoT devices include terminals. In a narrow sense, only a UE that supports AIoT device functions is considered as an AIoT device.

AIoT devices also include a device that supports AIoT device functions, such as a UE that supports AIoT device functions.

In an optional embodiment of this application, the AIoT device is also referred to as one of the following: a tag, a terminal of an AIoT service, a replying device (for example, a replying device of an AIoT task or operation), an ultra-low power terminal, an ultra-low complexity terminal, a near-zero power terminal, a zero-power terminal, and the like. This is not limited in embodiments of this application. It should be understood that if the AIoT device provided in embodiments of this application uses a backscatter technology, the AIoT device may also be referred to as a backscatter communication device or a backscatter device.

In an implementation, the AIoT device may be a tag or an electronic tag (that is, an RFID tag). A tag is a common term for radio frequency identification (Radio Frequency Identification, RFID).

In an optional embodiment of this application, the AIoT device may be classified based on energy source (energy source), backscatter technology, capability to generate active signals, energy storage capability (energy storage capability), passive (Passive) communication, active (Active) communication, or the like, including a plurality of types of devices.

In an implementation, the radio frequency identification technology for AIoT devices may be further divided into three types: active, passive, and semi-active. A passive AIoT device may also be referred to as Passive IOT, that is, a passive Internet of Things device.

In an implementation, a communication mode of the AIoT device may be one of the following: backscattering RF signals for signal transmission, and having a capability to actively generate signals.

In an implementation, the AIoT device can harvest energy from the ambient environment, such as RF energy, thermal energy, wind energy, or kinetic energy. Such devices may also be referred to as Ambient IoT.

In an implementation, the AIoT device may be considered as a terminal of an AIoT service, and therefore, may also be considered as a terminal. The AIoT device may be referred to as a terminal device.

The AIoT device may be but is not limited to one of the following:
(1) A passive device (Passive Device) that has an energy storage capability but does not have an independent signal generation/amplification capability, and adopts a backscatter technology for data transmission.
(2) A semi-passive device (semi-passive Device) that also falls into the general category of passive device. It has an energy storage capability but does not have an independent signal generation capability, and adopts a backscatter technology for data transmission. Stored energy may be used for amplifying reflected signals.
(3) An active device (Active Device) that has an energy storage capability and an independent signal generation capability, that is, has an active radio frequency component for data transmission.
(4) A passive device that has no energy storage and adopts a backscatter technology for data transmission.
(5) An AIoT device having at least one of the following features:
   having a peak power consumption of approximately 1 µW;
   having an energy storage function;
   having an initial sampling frequency offset (Sampling Frequency Offset, SFO) up to 10X ppm.

The device has neither downlink amplification nor uplink amplification.
UL transmission of the device is implemented by backscattering on an externally provided carrier.

(6) An AIoT device having at least one of the following features:
having a peak power consumption 1 less than or equal to several hundred µW;
having energy storage;
having an initial sampling frequency offset (SFO) up to 10X ppm;
having downlink and/or uplink amplification functionality in the device; and
generating uplink transmission in the device or implementing uplink transmission by backscattering on an externally provided carrier.

(7) The AIoT device may be a device having one of the following features:
- a device communicating with a reader/writer, or a device communicating with a reader/writer based on a first interface;
- a device that can respond to an AIoT task or an AIoT operation;
- a device that can connect to a wireless communication system through a reader/writer;
- a device supporting the first interface; and
- a device supporting a first RAT.

In an implementation, the AIoT device is an Internet of Things device other than an NB IOT device.

In an implementation, the AIoT device includes Internet of Things devices with low cost, low complexity, low energy consumption, or low power consumption.

In an optional embodiment of this application, active communication is further partitioned into one of the following: 1) DOA (device-originated-autonomous), that is, active communication autonomously initiated by a device; and 2) DO-DTT (Device-originated-device-terminated triggered), that is, active communication that is triggered. For example, the device initiates communication only when receiving downlink trigger signaling.

Optionally, obtaining may be understood as obtaining from a configuration, receiving, receiving after a request, obtaining through self-learning, obtaining through deduction based on information not received, or obtaining through processing based on received information. This may be specifically determined according to an actual requirement, and is not limited in embodiments of this application. For example, when specific capability indication information sent by a device is not received, it may be inferred that the device does not support the capability.

Optionally, sending may include broadcasting, broadcasting in a system message, and returning in response to a request.

In an optional embodiment of this application, a communication device may include at least one of the following: a communication network element and a terminal.

In an implementation of this application, the communication network element may include at least one of the following: a core network element and a radio access network element.

In embodiments of this application, the core network element (core network element) may include but is not limited to at least one of the following: a core network device, a core network node, a core network function, a core network element, a mobility management entity (Mobility Management Entity, MME), an access mobility management function (Access Management Function, AMF), a session management function (Session Management Function, SMF), a user plane function (User Plane Function, UPF), a serving gateway (serving GW, SGW), a PDN gateway (PDN Gate Way, PDN gateway), a policy control function (Policy Control Function, PCF), a policy and charging rules function unit (Policy and Charging Rules Function, PCRF), a serving GPRS support node (Serving GPRS Support Node, SGSN), a gateway GPRS support node (Gateway GPRS Support Node, GGSN), and an application function (Application Function).

In embodiments of this application, the RAN network element may include but is not limited to at least one of the following: a radio access network device, a radio access network node, a radio access network function, a radio access network unit, a 3GPP radio access network, a non-3GPP radio access network, a centralized unit (Centralized Unit, CU), a distributed unit (Distributed Unit, DU), a base station, an evolved base station (evolved Node B, eNB), a 5G base station (gNB), a radio network controller (Radio Network Controller, RNC), a base station (NodeB), a non-3GPP interworking function (Non-3GPP Inter Working Function, N3IWF), an access controller (Access Controller, AC) node, an access point (Access Point, AP) device, and a wireless local area network (Wireless Local Area Networks, WLAN) node, and an N3IWF.

The base station may be a base transceiver station (Base Transceiver Station, BTS) in the global system for mobile communications (Global System for Mobile Communications, GSM) or CDMA, or may be a base station (NodeB) in WCDMA, or may be an evolved base station (eNB or e-NodeB, evolutional Node B) or a 5G base station (gNB) in LTE. This is not limited in embodiments of this application.

In an implementation of this application, a UE may include one of the following: a terminal device, a terminal device and a card, and a card.

In an implementation of this application, the card may include one of the following: a subscriber identity module (Subscriber Identity Module, SIM) card, a universal subscriber identity module (Universal Subscriber Identity Module, USIM) card, and an embedded SIM (Embedded Subscriber Identity Module, eSIM).

In an implementation of this application, the terminal may include at least one of the following: a relay supporting a terminal function and/or a terminal supporting a relay function. The terminal may also be referred to as a terminal device or a user equipment (User Equipment, UE). The terminal may be a terminal side device such as a mobile phone, a tablet computer (Tablet Personal Computer), a laptop computer (Laptop Computer), a personal digital assistant (Personal Digital Assistant, PDA), a mobile Internet device (Mobile Internet Device, MID), a wearable device (Wearable Device), and a vehicle-mounted device. It should be noted that, a specific type of the terminal is not limited in embodiments of this application.

In an implementation of this application, the channel may also be referred to as a path.

In an implementation of this application, the expression "support" includes one of the following: being applicable and enabling (enable).

In an implementation of this application, the expression "apply" may also be referred to as one of the following: use, adopt, execute, and perform.

Optionally, the first object includes at least one of the following: a first radio bearer (such as a data radio bearer (Data Radio Bearer, DRB) or a logical channel) and a first quality of service (Quality of Service, QoS) flow.

In an implementation, the first QoS flow is a QoS flow that maps the first radio bearer.

In an implementation, the first radio bearer is a radio bearer mapped by the first QoS flow.

In an implementation of this application, an anchor gateway may be a gateway that terminates an N6 interface. The N6 interface is an interface between a mobile communication network and a data network (Data Network, DN).

In an implementation of this application, the reader/writer/interrogator may be an automatic identification device that can read electronic tag data. The reader/writer/interrogator can automatically identify a target object and obtain related data through a radio frequency signal.

In an implementation of this application, the reader/writer/interrogator may be an interface that communicates with the AIoT device through a first interface/wireless interface.

In an implementation of this application, a next generation access protocol (Next Generation Access Protocol, NGAP) is a new generation of access protocol and is used for supporting access control of a 5G network. A main function of the NGAP is to support access control of a 5G network, including access control, authentication, charging, security, mobility management, and the like.

In an implementation of this application, ambient Internet of Things (AIoT) targets low-end IoT (that is, AIoT devices) not previously covered by 3GPP. AIoT devices do not require a power supply (pure batteryless devices) or have a very limited energy storage capability (devices with limited energy storage capability), which harvest energy from the environment and achieve small-data signal transmission through backscattering or low-power radio frequency transmission (either by only amplifying radio frequency signals or by independently generating signals).

In an implementation of this application, the matching information may be a matching rule (Match Criteria) or a selection rule. One or more AIoT devices may be matched or selected from the plurality of AIoT devices by using the matching information. The matching information may include MemBank, a pointer (Pointer), a length (Length), and a Mask (Mask) for matching of AIoT devices. Only an AIoT device that satisfies a matching rule needs to execute a task.

In an implementation of this application, the UE ID is a UE identity index value (UE Identity Index Value) or a UE paging identity (UE Paging Identity).

An operation execution method, a processing apparatus, a communication device, and a readable storage medium provided in embodiments of this application are described in detail with reference to the drawings through embodiments and application scenarios thereof.

Refer to FIG. 2. An embodiment of this application provides an operation execution method, which is applied to a first communication device. The first communication device includes but is not limited to one of the following: an access network device (such as a RAN device), a terminal (such as a UE), a reader/writer (which may also be referred to as an interrogator), and an intermediate device of a reader/writer. The method includes the following steps:

Step 21: The first communication device obtains first information, where the first information includes at least one of the following: matching information, a first identifier, and a second identifier.

Step 22: The first communication device executes a first operation based on the first information.

The first operation includes at least one of the following:
selecting one or more ambient Internet of Things AIoT devices;
discovering one or more AIoT devices;
sending second information,
where
the second information includes at least one of the following: matching information, a first identifier, and a second identifier,
where
the matching information is used for selecting or matching one or more AIoT devices;
the first identifier is used for identifying one or more AIoT devices; and
the second identifier is used for identifying at least one of the following: one or more tasks, one or more sessions, and one or more processes.

In an implementation, the first communication device includes one of the following: an access network device (for example, a RAN device), a terminal (for example, a UE), a reader/writer (which may also be referred to as an interrogator), and an intermediate device of a reader/writer.

In an implementation, the discovering one or more AIoT devices may also be referred to as paging one or more AIoT devices.

In an implementation, the sending second information may be one of the following: sending the second information to a first interface, broadcasting the second information, or sending the second information to a second communication device (for example, an AIoT device). The first interface is an interface between the first communication device (for example, a reader/writer) and the AIoT device.

For example, a fourth communication device may send an AIoT service request to a third communication device, and the AIoT service request triggers the third communication device to send at least one of the matching information, the first identifier, and the second identifier to a fifth communication device. The fifth communication device sends a first message to the first communication device.

For the third communication device, the fourth communication device, and the fifth communication device, refer to the description of the corresponding embodiment. Details are not described herein.

In an implementation, the first identifier may be a group identifier. It may be understood that, one or more AIoT devices identified by the first identifier may be considered as an AIoT device group, or the first identifier (which may be referred to as a group identifier for short) may be used for identifying one or more AIoT devices. The one or more AIoT devices form an AIoT device group. It is easy to understand that the first identifier may be used for selecting or matching one or more AIoT devices. For example, ten thousand AIoT devices need to be selected for inventorying. In this case, identifiers of ten thousand AIoT devices may need to be sent. If the ten thousand AIoT devices share a common identifier (that is, a first identifier for identifying a plurality of AIoT devices (subsequently referred to as a group identifier for short)), the first communication device needs to send only one group identifier. It is easy to understand that using a group identifier to identify a plurality of AIoT devices is more conductive to selecting a large quantity of AIoT devices than using an identifier to identify a single AIoT device.

An AIoT device may use either an identifier of the AIoT device (that is, a single AIoT device identifier) or the first identifier (for example, a group identifier).

In an implementation, the one or more tasks, the one or more sessions, or the one or more processes identified by the second identifier may be used for selecting one or more AIoT devices. For example, an inventory task targets ten thousand AIoT devices, which cannot be completed with one round of signaling exchange. Within a life cycle of the task, the first communication device may exchange a plurality of pieces of signaling with the AIoT device. An AIoT device may, after receiving first signaling and determining that the AIoT device is a target AIoT device, continue to exchange other signaling of the task with the first communication device. If the AIoT device may, after receiving the first signaling and determining that the AIoT device is not the target AIoT device, ignore any subsequent signaling of the task received by the AIoT device. It is easy to understand that an identifier of the task also achieves selecting or matching one or more AIoT devices.

The session or the process is one of manifestations of the task. The three terms, that is, session, process, and task, may be used interchangeably.

In an implementation, the sending the second information to a second communication device may include: sending the second information to the AIoT device.

The second information may be used for at least one of the following:
discovering, matching, or selecting one or more AIoT devices;
executing or skipping executing, by the AIoT device, an AIoT service-related operation based on a success or a failure of matching with the second information; and
sending or skipping sending, by the AIoT device, a first response based on a success or a failure of the matching with the second information.

The executing or skipping executing, by the AIoT device, an AIoT service-related operation based on a success or a failure of matching with the second information includes:
executing, by the AIoT device, the AIoT service-related operation in a case that the matching with the second information succeeds; or
skipping executing, by the AIoT device, the AIoT service-related operation in a case that the matching with the second information fails.

The executing the AIoT service-related operation is as described in an embodiment of the second communication device, and therefore is not described in detail herein.

Optionally, after the sending second information to a second communication device, the method further includes:
receiving a first response sent by the second communication device, where the first response includes at least one of the following: information for identifying the AIoT device, information for indicating a matching success, and information for indicating a matching failure.

In an implementation, the receiving a first response sent by the second communication device may be receiving the first response sent by the AIoT device.

In an implementation, the information for identifying the AIoT device may include an identifier of the AIoT device. The identifier may be used for uniquely identifying the AIoT device.

Optionally, the matching information does not include at least one of the following: a terminal identifier, the first identifier, and the second identifier.

In an implementation, the matching information may not include at least one of the following: the terminal identifier may be: a UE ID (such as a UE paging identity (Paging Identity)), an international mobile subscriber identity (International Mobile Subscriber Identity, IMSI) (such as a 5G IMSI), an S-Temporary Mobile Subscription Identifier (S-Temporary Mobile Subscription Identifier, S-TMSI) (such as a 5G-S-TMSI), or a subscription permanent identifier (Subscription Permanent Identifier, SUPI)). The UE Paging Identity includes an S-TMSI (such as a 5G-S-TMS), a first identifier, and a second identifier.

In an implementation, the matching information is used for selecting or matching one or more AIoT devices, but the matching information does not include the first identifier and/or the second identifier. It is easy to understand that the first identifier or the second identifier may also be used for selecting or matching information of one or more AIoT devices. However, the matching information includes other content for selecting or matching one or more AIoT devices, such as but not limited to at least one of the following: a character string, a bit string (Bit String), text, a picture, and a sound. If the AIoT device matches the matching information, it indicates that the AIoT device is a target AIoT device.

One matching or selection method is that the matching information is stored in the AIoT device. For example, if the matching information is "AAA" and the AIoT device also has "AAA", the matching succeeds.

Another matching or selection method is that the AIoT device stores information corresponding to the matching information (which may be different from but corresponds to the matching information). For example, if the matching information is "AAA" and the AIoT device has "BBB", as a correspondence between AAA and BBB, the matching succeeds.

For example, ten thousand AIoT devices need to be selected for inventorying. In this case, identifiers of ten thousand AIoT devices may need to be sent. If the ten thousand AIoT devices share a common identifier (an identifier for identifying a plurality of AIoT devices (subsequently referred to as a group identifier for short)), only one group identifier needs to be sent. It is easy to understand that using a group identifier to identify a plurality of AIoT devices is more conductive to selecting a large quantity of AIoT devices than using an identifier to identify a single AIoT device. Similarly, if the ten thousand AIoT devices share common matching information, only one piece of matching information needs to be sent. It is easy to understand that using the matching information is more conductive to selecting a large quantity of AIoT devices than using an identifier to identify a single AIoT device. Generally, a field and a format usually need to be defined for an identifier. However, a form of the matching information is not restricted, which is more flexible.

An example is as follows:
If, among the ten thousand AIoT devices, five thousand AIoT devices use an apple identifier, two thousand AIoT devices use a pear identifier, and three thousand AIoT devices use an orange identifier, the matching information can be more flexible than the identifier. An AIoT device identified by using a pear stores "pear". For example, 1), if only AIoT devices identified by using a pear need to be inventoried, the matching information may be set to "pear". 2) If AIoT devices identified by using an apple and an orange need to be inventoried, the matching information may be set to "pear" or "orange". 3) If AIoT devices identified by using a pear and an apple need to be inventoried, the matching information may be set to "pear" or "apple". Using identifiers may be relatively complicated. For example, a "pear" AIoT device needs to store a pear identifier, a pear-and-orange identifier, and a pear-and-apple identifier. Alternatively, the AIoT device stores a pear identifier or an orange identifier. The first communication device sends both the pear identifier and the orange identifier to select oranges and pears.

Optionally, at least one of the first information and the second information further includes location information, where the location information is used for indicating one of the following: a location in a storage of the AIoT device and a location of the matching information or information corresponding to the matching information in the AIoT device.

The storage is a function or device for storing information (such as data or files), for example, a memory or a storage device.

In an implementation, the location in the storage of the AIoT device may refer to a storage area in the function or device of the AIoT device for storing information.

In an implementation, in a case that the first information includes the matching information, the first information further includes location information.

In an implementation, in a case the second information includes the matching information, the second information further includes location information.

In an implementation, the matching information may alternatively be described as a matching rule.

In an implementation, the first information may include the matching information. The AIoT device may search a storage area (for example, a memory area or a storage device area) of the AIoT device for the matching information or the information corresponding to the matching information, to determine whether the AIoT device is an AIoT device matching the matching information. For example, in a case that the matching information or the information corresponding to the matching information is found in the storage area (for example, a memory area or a storage device area), the AIoT device determines that the AIoT device is an AIoT device matching the matching information. Otherwise, the AIoT device determines that the AIoT device is not an AIoT device matching the matching information.

In an implementation, the first information may include the matching information and the location information. The AIoT device may search a location in the storage (such as a memory or a storage device) indicated by the location information for the matching information or the information corresponding to the matching information, to determine whether the AIoT device is an AIoT device matching the matching information. For example, in a case that the matching information or the information corresponding to the matching information is found at the location in the storage indicated by the location information, the AIoT device determines that the AIoT device is an AIoT device matching the matching information. Otherwise, the AIoT device determines that the AIoT device is not an AIoT device matching the matching information.

Optionally, the matching information includes at least one of the following: a bit string, a character string, text, a picture, a video, audio, a tactile signal, file content, a file type, and a file identifier;
or
the location information includes at least one of the following: a storage area, a start pointer of the storage area, an end pointer of the storage area, and a length of the storage area.

In an implementation, the length of the storage area may be used for indicating a length of the storage area starting from a location specified by the pointer. For example, the matching information is stored at a third bit from the location specified by the pointer. In this case, the length of the storage area may be three bits.

The storage area is, for example, a memory area or a storage device area.

In an implementation, the bit string (bit string) is used for matching AIoT devices. A value of the bit string may be customized. In this embodiment, a rule for customizing a bit string is not limited. As long as the AIoT device can determine a match or mismatch (for example, depending on whether content in the memory corresponds to the bit string), it may be determined that the bit string complies with the rule for customizing a bit string. The same principle applies to other types of matching information. Details are not described herein.

In an implementation, the bit string may be a bit string at a location specified by a start pointer in a specified storage area.

In an implementation, the file content, the file type, or the file identifier may be used for indicating a file stored in the AIoT device.

In an implementation, usage of the first message includes: discovering or selecting one or more AIoT devices.

In an implementation, the storage area may include a content area in which content for matching AIoT devices is located.

Optionally, the obtaining first information includes one of the following: obtaining first information through local configuration, generating first information, and receiving a first message.

The first message includes the first information.

The first message includes at least one of the following:
a first paging message, a message different from the first paging message, a first notification message, a message different from the first notification message, and a message different from the first notification message and the first paging message.

In an implementation, the first information is used for one of the following: discovering, selecting, or matching one or more AIoT devices, and requesting to execute an AIoT task.

In an implementation, that the first communication device obtains first information may be: the first communication device receives a first message, where the first message includes the first information. The first message may be sent by the third communication device, or sent by the fourth communication device, or sent by the fifth communication device. This is not limited in this embodiment. The third communication device may include an AIoT function, a NEF, a PCF, or an SMF. The fourth communication device may include an AF. The fifth communication device may include an AMF.

In an implementation, the first message may include a first paging message (such as an interface paging message between an access network device or a reader/writer and a core network device, or an NG application protocol (NG Application Protocol, NGAP) interface paging message), a first notification message (a notification message of a non-access stratum (Non-Access Stratum, NAS) interface), another message (such as another NGAP message) different from the first paging message, another message (such as another NAS message) different from the first notification message, or another message different from the first paging message and the first notification message.

In an implementation, when the first message is another message (such as another NGAP message) different from the first paging message, another message (such as another NAS message) different from the notification message, or another message different from the first paging message and the notification message, usage of the first message includes one of the following: selecting one or more AIoT devices, and discovering one or more AIoT devices.

In an implementation, the receiving a first message may be receiving a first message sent by the third communication device, the fourth communication device, or the fifth communication device. This is not limited in this embodiment. The third communication device may include a core network device (such as an AIoT function, a NEF, a PCF, an SMF, or an AMF). The fourth communication device may include a core network device (such as an AF or a NEF). The fifth communication device may include a core network device (such as an AMF).

In an implementation, the first paging message is an NGAP paging (Paging) message.

In an implementation, the first notification message may be a NAS layer notification message (Notification Message).

Optionally, in a case that the first message is the first paging message or the first notification message, the first message further includes first indication information, where the first indication information is used for indicating at least one of the following: ignoring a terminal identifier in the first message.

The method further includes performing at least one of the following based on the first indication information:
ignoring the terminal identifier in the first message;
configuring a second message not to include a terminal identifier; and
configuring the second message to include second indication information, where the second indication information is used for indicating at least one of the following: ignoring a terminal identifier in the second message.

In an implementation, the terminal identifier may be a UE ID (such as a UE Paging Identity, an IMSI (such as a 5G IMSI), an S-TMSI (5G-S-TMSI), or a SUPI). The UE Paging Identity includes an S-TMSI (such as a 5G-S-TMS).

The first message includes at least one of the following: a first paging message (such as an interface paging message between an access network device or a reader/writer and a core network device or an NGAP interface paging message) and a first notification message (such as a NAS Notification message).

The second message includes a second paging message (a paging message in an air interface (such as a Paging message of a Uu interface)).

Optionally, the sending second information includes: sending the second message, where the second message includes the second information.

The second message includes at least one of the following:
a second paging message, a message different from the second paging message, and a message of a first interface.

The first interface is an interface between the first communication device and the AIoT device.

In an implementation, the first communication device may be a reader/writer, and the first interface may be an interface between the reader/writer and the AIoT device.

In an implementation, the second information is used for one of the following: discovering, selecting, or matching one or more AIoT devices, and requesting to execute an AIoT task.

In an implementation, the second paging message may be a paging message in an air interface (such as a Paging message of a Uu interface).

In an implementation, the second message may include: a second paging message, another message different from the second paging message, and a message of a first interface, where the first interface is an interface between a reader/writer or an interrogator and the AIoT device.

In an implementation, when the second message is another message different from the second paging message or another message of the message of the first interface, usage of the second message includes one of the following: selecting one or more AIoT devices, and discovering one or more AIoT devices.

In an implementation, the sending the second message may be one of the following: sending the second message to the first interface, broadcasting the second message, and sending the second message to the second communication device (for example, the AIoT device). The first interface is an interface between a reader/writer and the AIoT device.

Optionally, in a case that the second message is the second paging message, the second message further includes the second indication information, where the second indication information is used for indicating at least one of the following: ignoring the terminal identifier in the second message.

In this embodiment of this application, the first operation is executed based on the first information, and the matching information or the first identifier is used to select one or more AIoT devices or discover the selected AIoT devices, so that operations can be implemented on the one or more AIoT devices. Further, this embodiment of this application supports efficient group-based selection of one or more AIoT devices. Furthermore, this embodiment of this application can reuse existing messages (such as paging messages or notification messages) to select one or more AIoT devices, and can implement exception processing that is to be performed due to the reuse of existing messages. In addition, a problem of how to process executing, by a second reader/writer/interrogator, the same task of selecting AIoT devices can be resolved by using the second identifier.

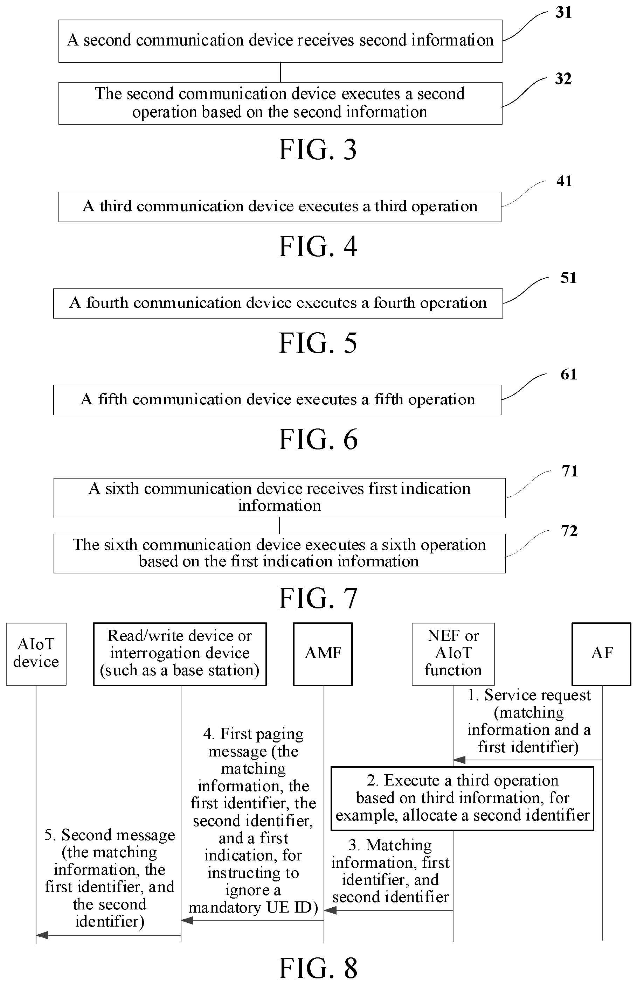

Refer to FIG. 3. An embodiment of this application provides an operation execution method, which is applied to a second communication device. The second communication device includes but is not limited to one of the following: an AIoT device and a terminal (for example, a terminal having an AIoT device function, such as a UE having an AIoT device function). The method includes the following steps:
Step 31: A second communication device executes a second operation, where the second operation includes at least one of the following:
Step 32: The second communication device receives second information, where the second information includes at least one of the following: matching information, a first identifier, and a second identifier.

The second communication device executes the second operation based on the second information.

The second operation includes at least one of the following:
performing matching with the second information;
executing or skipping executing an AIoT service-related operation based on a success or a failure of matching with the second information; and
sending or skipping sending a first response based on a success or a failure of the matching with the second information,
where
the matching information is used for selecting or matching one or more AIoT devices;
the first identifier is used for identifying one or more AIoT devices; and
the second identifier is used for identifying at least one of the following: one or more tasks, one or more sessions, and one or more processes.

Optionally, the second information further includes location information, where the location information is used for indicating one of the following: a location in a storage of the AIoT device and a location of the matching information or information corresponding to the matching information in the AIoT device.

In an implementation, in a case that the second information includes the matching information, the second information further includes location information, where the location information is used for indicating one of the following: a location in a storage of the AIoT device and a location of the matching information or information corresponding to the matching information in the AIoT device.

In an implementation, the matching information includes at least one of the following: a bit string, a character string, text, a picture, a video, audio, a tactile signal, file content, a file type, and a file identifier;
or
the location information includes at least one of the following: a storage area, a start pointer of the storage area, an end pointer of the storage area, and a length of the storage area.
where
in an implementation, the length of the storage area may be used for indicating a length of the storage area starting from a location specified by the pointer. For example, the matching information is stored at a third bit from the location specified by the pointer. In this case, the length of the storage area may be three bits.

In an implementation, the second communication device includes one of the following: an AIoT device, a terminal supporting an AIoT device function, and a terminal.

In an implementation, the second information may include the matching information. The matching with the second information may be performed as follows: For example, the AIoT device may search a storage area of the AIoT device for the matching information or the information corresponding to the matching information, to determine whether the AIoT device is an AIoT device matching the matching information. For example, when the matching information is found in the storage area, the AIoT device determines that the AIoT device is an AIoT device matching the matching information. Otherwise, the AIoT device determines that the AIoT device is not an AIoT device matching the matching information.

In an implementation, the second information may include the matching information and the location information. The matching with the second information may be performed as follows: For example, the AIoT device may search a location in the storage indicated by the location information for the matching information or the information corresponding to the matching information, to determine whether the AIoT device is an AIoT device matching the matching information. For example, in a case that the matching information is found at the location in the storage indicated by the location information, the AIoT device determines that the AIoT device is an AIoT device matching the matching information. Otherwise, the AIoT device determines that the AIoT device is not an AIoT device matching the matching information.

In an implementation, the receiving second information may be one of the following: receiving the second information sent by a first interface, receiving the second information that is broadcast, and receiving the second information sent by a first communication device. The first interface is an interface between a reader/writer and the AIoT device.

Optionally, the first response includes at least one of the following:
information for identifying the AIoT device; and
information for indicating a matching success or information for indicating a matching failure.

In an implementation, in a case that the matching succeeds, the first response is sent to the first communication device. The first response includes information for indicating a matching success and/or information for identifying the AIoT device.

In an implementation, in a case that the matching fails, the first response is not sent to the first communication device.

In another implementation, in a case that the matching fails, the first response is sent to the first communication device. The first response includes information for indicating a matching failure.

Optionally, the executing or skipping executing an AIoT service-related operation based on a success or a failure of matching with the second information includes:
executing the AIoT service-related operation in a case that the matching with the second information succeeds; or
skipping executing the AIoT service-related operation in a case that the matching with the second information fails.

Optionally, the executing an AIoT service-related operation includes at least one of the following:
waking up the second communication device or enabling the second communication device to enter an awake state;
entering a ready state for executing an AIoT operation or preparing to execute an AIoT operation;
executing an AIoT operation; and
sending at least one of the following to a first communication device: information for identifying the AIoT device, and a first response, where the first response is information for indicating a matching success.

Optionally, the waking up the second communication device or enabling the second communication device to enter an awake state may be expressed as one of the following:
the second communication device is activated;
the second communication device can respond or reply to signaling (such as an instruction or a command) of a reader/writer; and
the second communication device enters a ready state for executing an AIoT operation or a state of preparing to execute an AIoT operation.

Optionally, the entering a ready state for executing an AIoT operation or preparing to execute an AIoT operation includes at least one of the following:
enabling the second communication device to enter a state of waiting for being discovered, and enabling the second communication device to enter a state of waiting for next-step/subsequent signaling;
responding or replying to signaling of the first communication device;
executing an operation based on the signaling of the first communication device; and
executing an operation based on signaling corresponding to a task, a session, or a process corresponding to the second identifier.

The executing an operation based on the signaling of the first communication device includes: executing the operation based on next-step or subsequent signaling of the first communication device.

The executing an operation based on signaling corresponding to a task, a session, or a process corresponding to the second identifier includes: executing the operation based on next-step or subsequent signaling corresponding to the task, the session, or the process corresponding to the second identifier.

The signaling is also referred to as one of the following: a message, an instruction, and a command.

In an implementation, in a case that the matching with the second information succeeds, the second communication device sends the information for identifying the AIoT device to the first communication device.

In another implementation, when the matching with the second information fails, the second communication device skips sending the information for identifying the AIoT device to the first communication device.

It is easy to understand that initially the reader/writer does not know a quantity of AIoT devices that match the second information, nor does it know specific AIoT devices that match the second information. Through responses of the AIoT devices, the reader/writer can learn specific AIoT devices that match the second information, and then can further execute operations on these AIoT devices that match the second information (for example, execute operations on one AIoT device or a group of AIoT devices).

In an implementation, the second communication device may execute an operation based on subsequent signaling of one or more tasks, one or more sessions, or one or more processes. The one or more tasks, the one or more sessions, or the one or more processes may be tasks, sessions, or processes satisfying the second identifier.

It should be noted that, the first communication device may execute a plurality of tasks, sessions, or processes. Therefore, an AIoT device satisfying the second information needs to further execute subsequent signaling of the task, the session, or the process.

In an implementation, the AIoT operation includes at least one of the following:
inventorying or discovering (or paging) one or more AIoT devices;
reading information of the one or more AIoT devices (information in an AIoT storage (for example, identification information or perceived information of the AIoT devices));
writing information to the one or more AIoT devices;
controlling the one or more AIoT devices (for example, activating and deactivating the AIoT devices); and
positioning the one or more AIoT devices.

In another implementation, the AIoT operation may include at least one of the following:
an inventorying or discovering operation;
a read operation;
a write operation;
a control operation (for example, activating an AIoT device or deactivating an AIoT device (or killing or deserving an AIoT device)); and
a positioning (or object finding) operation.

It is easy to understand that if the first message directly carries information for indicating an AIoT operation, the second communication device may directly execute the AIoT operation.

Optionally, the skipping executing an AIoT service-related operation includes at least one of the following:
keeping a current state unchanged;
skipping sending or sending a first response to the first communication device, where the first response includes at least one of the following: information for identifying the AIoT device, information for indicating a matching success, and information for indicating a matching failure; and
ignoring one of the following: the signaling of the first communication device, and the signaling corresponding to the task, the session, or the process corresponding to the second identifier.

The ignoring the signaling of the first communication device includes: ignoring the next-step or subsequent signaling of the first communication device.

The ignoring the signaling corresponding to the task, the session, or the process corresponding to the second identifier includes: ignoring the next-step or subsequent signaling corresponding to the task, the session, or the process corresponding to the second identifier.

The signaling is also referred to as one of the following: a message, an instruction, and a command.

In an implementation, the second communication device may ignore subsequent signaling of one or more tasks, one or more sessions, or one or more processes. The one or more tasks, the one or more sessions, or the one or more processes may be tasks, sessions, or processes satisfying the second identifier.

For example, the second communication device ignores signaling of the same process or session by determining, based on the subsequent signaling carrying the second identifier same as that in the second information, that the signaling belongs to the same process or session.

Optionally, the receiving second information includes: receiving a second message.

The second message includes at least one of the following:
a second paging message, a message different from the second paging message, and a message of a first interface.

The first interface is an interface between a reader/writer and the AIoT device.

In an implementation, the second information is used for one of the following: discovering, selecting, or matching one or more AIoT devices, and requesting to execute an AIoT task.

In an implementation, the second paging message may be a paging message in an air interface (such as a Paging message of a Uu interface).

In an implementation, the second message may include: a second paging message, another message different from the second paging message, and a message of a first interface, where the first interface is an interface between a reader/writer or an interrogator and the AIoT device.

In an implementation, when the second message is another message different from the second paging message or another message of the message of the first interface, usage of the second message includes one of the following: selecting one or more AIoT devices, and discovering one or more AIoT devices.

In this embodiment of this application, the second operation is executed based on the second information, and the matching information or the first identifier is used to match one or more AIoT devices, so that operations can be implemented on the one or more AIoT devices. Further, in this embodiment of this application, the AIoT service-related operation is executed in a case that the matching succeeds, or the AIoT service-related operation is not executed in a case that the matching fails. A problem of how to process executing, by a second reader/writer/interrogator, the same task of selecting AIoT devices can be resolved by using the second identifier.

Refer to FIG. 4. An embodiment of this application provides an operation execution method, which is applied to a third communication device. The third communication device includes but is not limited to one of the following: a core network device (such as an AIoT function, a NEF, a PCF, an SMF, or an AMF). The method includes the following steps:

Step 41: The third communication device executes a third operation.

The third operation includes at least one of the following:
allocating a second identifier; and
sending at least one of the following: matching information, a first identifier, and a second identifier,
where
the matching information is used for selecting or matching one or more AIoT devices;
the first identifier is used for identifying one or more AIoT devices; and
the second identifier is used for identifying at least one of the following: one or more tasks, one or more sessions, and one or more processes.

In an implementation, the third operation further includes: sending location information, where the location information is used for indicating one of the following: a location in a storage of the AIoT device and a location of the matching information or information corresponding to the matching information in the AIoT device.

In an implementation, in a case that the third operation includes sending the matching information, the third operation further includes: sending the location information.

In an implementation, the matching information includes at least one of the following: a bit string, a character string, text, a picture, a video, audio, a tactile signal, file content, a file type, and a file identifier;
or
the location information includes at least one of the following: a storage area, a start pointer of the storage area, an end pointer of the storage area, and a length of the storage area.
where
in an implementation, the length of the storage area may be used for indicating a length of the storage area starting from a location specified by the pointer. For example, the matching information is stored at a third bit from the location specified by the pointer. In this case, the length of the storage area may be three bits.

In an implementation, the third communication device may include a core network device (such as an AIoT function, a NEF, a PCF, an SMF, or an AMF).

Optionally, the executing a third operation includes:
obtaining, by the third communication device, third information; and
executing, by the third communication device, the third operation based on the third information.

The third information includes at least one of the following:
matching information, a first identifier, and AIoT task information.

In an implementation, the AIoT task or the AIoT operation includes at least one of the following:
inventorying or discovering (or paging) one or more AIoT devices;
reading information of the one or more AIoT devices (information in an AIoT storage (for example, identification information or perceived information of the AIoT devices));
writing information to the one or more AIoT devices;
controlling the one or more AIoT devices (for example, activating and deactivating the AIoT devices); and
positioning the one or more AIoT devices.

In an implementation, the third information further includes location information, where the location information is used for indicating one of the following: a location in a storage of the AIoT device and a location of the matching information or information corresponding to the matching information in the AIoT device.

In an implementation, in a case that the third information includes the matching information, the third information further includes location information, where the location information is used for indicating one of the following: a location in a storage of the AIoT device and a location of the matching information or information corresponding to the matching information in the AIoT device.

In an implementation, the obtaining, by the third communication device, third information may be: locally configuring or generating, by the third communication device, the third information, or receiving, by the third communication device, fourth information sent by a fourth communication device and obtaining the third information from the fourth information. The fourth communication device may include an AF.

In an implementation, the third information includes a second identifier.

Optionally, the executing a third operation includes:
allocating, by the third communication device, the second identifier in a case that the third information does not include the second identifier; or
using, by the third communication device, the second identifier in a case that the third information includes the second identifier.

In this embodiment of this application, the third operation is executed based on the third information (for example, the second identifier is allocated based on the matching information or the first identifier), so that operations can be implemented on the one or more AIoT devices. Further, in this embodiment of this application, the second identifier can be allocated in a case that the third information does not include the second identifier, and the second identifier can be used in a case that the third information includes the second identifier. In this way, a problem of how to process executing, by a second reader/writer/interrogator, the same task of selecting AIoT devices can be resolved by using the second identifier.

Refer to FIG. 5. An embodiment of this application provides an operation execution method, which is applied to a fourth communication device. The fourth communication device includes but is not limited to a core network device (such as an AF or a NEF). The method includes the following steps:

Step 51: The fourth communication device executes a fourth operation, where the fourth operation includes at least one of the following:
sending fourth information, where the fourth information includes at least one of the following: matching information, a first identifier, a second identifier, and AIoT task information,
where
the matching information is used for selecting or matching one or more AIoT devices;
the first identifier is used for identifying one or more AIoT devices; and
the second identifier is used for identifying at least one of the following: one or more tasks, one or more sessions, and one or more processes.

The fourth information may be used for an AIoT service request.

In an implementation, the fourth communication device includes a core network device, such as an AF.

The sending an AIoT service request may be sending the AIoT service request to a third communication device. The third communication device may include an AIoT function, a NEF, a PCF, or an SMF.

In an implementation, the fourth information further includes location information, where the location information is used for indicating one of the following: a location in a storage of the AIoT device and a location of the matching information or information corresponding to the matching information in the AIoT device.

In an implementation, in a case that the fourth information includes the matching information, the fourth information further includes location information, where the location information is used for indicating one of the following: a location in a storage of the AIoT device and a location of the matching information or information corresponding to the matching information in the AIoT device.

In an implementation, the matching information includes at least one of the following: a bit string, a character string, text, a picture, a video, audio, a tactile signal, file content, a file type, and a file identifier;
or
the location information includes at least one of the following: a storage area, a start pointer of the storage area, an end pointer of the storage area, and a length of the storage area.
where
in an implementation, the length of the storage area may be used for indicating a length of the storage area starting from a location specified by the pointer. For example, the matching information is stored at a third bit from the location specified by the pointer. In this case, the length of the storage area may be three bits.

In this embodiment of this application, the fourth information is sent, which can trigger selection of one or more AIoT devices or discovery of the selected AIoT devices, so that operations can be implemented on the one or more AIoT devices. Further, this embodiment of this application supports efficient group-based selection of one or more AIoT devices.

Refer to FIG. 6. An embodiment of this application provides an operation execution method, which is applied to a fifth communication device. The fifth communication device includes but is not limited to a core network device (such as an AMF). The method includes the following steps:
Step 61: The fifth communication device executes a fifth operation.

The fifth operation includes at least one of the following:
carrying first indication information in a first message, where the first indication information is used for indicating at least one of the following: ignoring a terminal identifier in the first message; and
sending first information,
where
the first information includes at least one of the following: matching information, a first identifier, and a second identifier,
where
the matching information is used for selecting or matching one or more AIoT devices;
the first identifier is used for identifying one or more AIoT devices; and
the second identifier is used for identifying at least one of the following: one or more tasks, one or more sessions, and one or more processes.

In an implementation, the fifth communication device includes a core network device, such as an AMF.

The sending first information may be sending the first information to a first communication device.

Optionally, that the fifth communication device executes a fifth operation includes:
the fifth communication device receives fifth information, where the fifth information includes at least one of the following: matching information, a first identifier, and a second identifier; and
the fifth communication device executes the fifth operation based on the fifth information.

In an implementation, the fifth information may be sent by a third communication device or a fourth communication device. This is not limited in this embodiment. The third communication device may include an AIoT function, a NEF, a PCF, or an SMF. The fourth communication device may include an AF.

In an implementation, the fifth information further includes location information, where the location information is used for indicating one of the following: a location in a storage of the AIoT device and a location of the matching information or information corresponding to the matching information in the AIoT device.

In an implementation, in a case that the fifth information includes the matching information, the fifth information further includes location information, where the location information is used for indicating one of the following: a location in a storage of the AIoT device and a location of the matching information or information corresponding to the matching information in the AIoT device.

In an implementation, the matching information includes at least one of the following: a bit string, a character string, text, a picture, a video, audio, a tactile signal, file content, a file type, and a file identifier;
or
the location information includes at least one of the following: a storage area, a start pointer of the storage area, an end pointer of the storage area, and a length of the storage area.
where
in an implementation, the length of the storage area may be used for indicating a length of the storage area starting from a location specified by the pointer. For example, the matching information is stored at a third bit from the location specified by the pointer. In this case, the length of the storage area may be three bits.

Optionally, the carrying first indication information in a first message includes: carrying the first indication information in the first message in a case that a first condition is satisfied.

The first condition includes at least one of the following:
the first information is carried in the first message; and
the first message is a first paging message or a first notification message.

In an implementation, the fifth communication device includes a core network device, such as an AMF.

In an implementation, the first message reuses an existing Paging message. The paging message includes at least one of matching information and a first identifier. The first identifier is used for identifying a group of AIoT devices, and indicates, by using first indication information, one of the following: a mandatory UE ID in the paging message is not available, and the mandatory UE ID needs to be ignored.

Optionally, the first message includes at least one of the following:
a first paging message, a message different from the first paging message, a first notification message, a message different from the first notification message, and a message different from the first notification message and the first paging message.

In an implementation, the first paging message is an NGAP paging (Paging) message.

In an implementation, the first notification message may be a NAS layer notification message (Notification Message).

In this embodiment of this application, the fifth operation is executed based on the fifth information, and the first information may be sent by using the matching information, the first identifier, or the second identifier, so that operations can be implemented on one or more AIoT devices. Further, this embodiment of this application can select one or more AIoT devices or discover the selected AIoT devices, and support efficient group-based selection of one or more AIoT devices.

Refer to FIG. 7. An embodiment of this application provides an operation execution method, which is applied to a sixth communication device. The sixth communication device includes but is not limited to one of the following: an access network device (such as a RAN device), a terminal (such as a UE), a reader/writer (which may also be referred to as an interrogator), and an intermediate device of a reader/writer. The method includes the following steps:
Step 71: The sixth communication device receives first indication information, where the first indication information is used for indicating at least one of the following: ignoring a terminal identifier in the first message.
Step 72: The sixth communication device executes a sixth operation based on the first indication information.

The sixth operation includes at least one of the following:
ignoring the terminal identifier in the first message;
configuring a second message not to include a terminal identifier; and
configuring the second message to include received second indication information, where the second indication information is used for indicating at least one of the following: ignoring a terminal identifier in the second message.

In an implementation, the first indication information may be sent by a third communication device, a fourth communication device, or a fifth communication device. This is not limited in this embodiment. The third communication device may include an AIoT function, a NEF, a PCF, or an SMF. The fourth communication device may include an AF. The fifth communication device may include an AMF.

Optionally, the first message includes at least one of the following: a first paging message and a first notification message.

In an implementation, the first paging message is an NGAP paging (Paging) message.

In an implementation, the first notification message may be a NAS layer notification message (Notification Message).

Optionally, the second message includes a second paging message.

In an implementation, the second paging message may be a paging message in an air interface (such as a Paging message of a Uu interface).

In an implementation, the first message includes at least one of the following: matching information, a first identifier, and a second identifier.

In an implementation, the second message includes at least one of the following: matching information, a first identifier, and a second identifier,
where
the matching information is used for selecting or matching one or more AIoT devices;
the first identifier is used for identifying one or more AIoT devices; and
the second identifier is used for identifying at least one of the following: one or more tasks, one or more sessions, and one or more processes.

This embodiment of this application can reuse existing messages (such as paging messages or notification messages) to select one or more AIoT devices, and can implement exception processing that is to be performed due to the reuse of existing messages.

The operation execution method in embodiments of this application is described below with reference to specific application scenarios.

### Embodiment 1 of this application:

Refer to FIG. 8. Embodiment 1 of this application includes the following steps:
Step 1: An AF sends a service request to a NEF or AIoT function, where the service request may be an AIoT service request.
Step 2: The NEF or AIoT function executes a third operation based on third information, for example, allocates a second identifier. Optionally, the third operation is described in the embodiment of the third communication device.
   It should be noted that, in a case that the AIoT service request sent by the AF does not include a second identifier, the NEF or AIoT function allocates the second identifier. In a case that the AIoT service request sent by the AF includes the second identifier, the NEF or AIoT function may use the second identifier, for example, send the second identifier to an AMF.
Step 3: The NEF or AIoT function sends at least one of matching information, a first identifier, and the second identifier to an AMF.
Step 4: The AMF sends a first paging message to a reader/writer (such as an access network device), where the first paging message includes at least one of the matching information, the first identifier, the second identifier, and first indication information, and the first indication information is used for instructing to ignore a mandatory UE ID.
Step 5: The reader/writer (such as an access network device) sends a second message to an AIoT device, where the second message carries at least one of the matching information, the first identifier, and the second identifier. In a case that the second message is a second paging message, the second message may carry the first indication information, and the first indication information is used for instructing to ignore the mandatory UE ID.

### Embodiment 2 of this application:

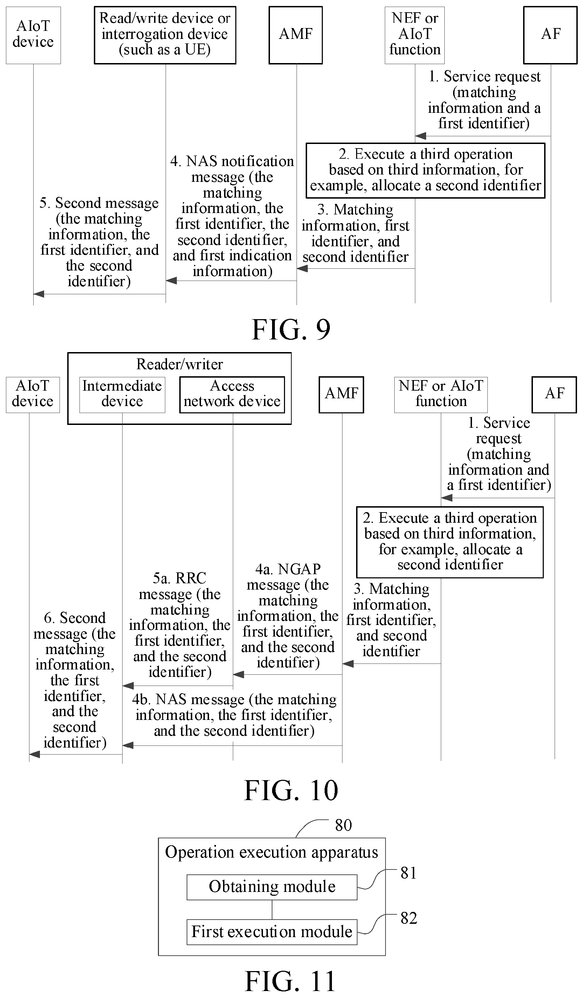

Refer to FIG. 9. Embodiment 2 of this application includes the following steps:
Step 1: An AF sends a service request to a NEF or AIoT function, where the service request may be an AIoT service request.
Step 2: The NEF or AIoT function executes a third operation based on third information, for example, allocates a second identifier. Optionally, the third operation is described in the embodiment of the third communication device.
   It should be noted that, in a case that the AIoT service request sent by the AF does not include a second identifier, the NEF or AIoT function allocates the second identifier. In a case that the AIoT service request sent by the AF includes the second identifier, the NEF or AIoT function may use the second identifier, for example, send the second identifier to an AMF.
Step 3: The NEF or AIoT function sends at least one of matching information, a first identifier, and the second identifier to an AMF.
Step 4: The AMF sends a NAS notification message to a reader/writer (such as a UE), where the NAS notification message includes at least one of the matching information, the first identifier, the second identifier, and first indication information, and the first indication information is used for instructing to ignore a mandatory UE ID.
Step 5: The reader/writer (such as an access network device) sends a second message to an AIoT device, where the second message carries at least one of the matching information, the first identifier, and the second identifier. In a case that the second message is a second paging message, the second message may carry the first indication information, and the first indication information is used for instructing to ignore the mandatory UE ID.

### Embodiment 3 of this application:

Refer to FIG. 10. Embodiment 3 of this application includes the following steps:
In an implementation, an intermediate device and an access network device together form a reader/writer.

Step 1: An AF sends a service request to a NEF or AIoT function, where the service request may be an AIoT service request.

Step 2: The NEF or AIoT function executes a third operation based on third information, for example, allocates a second identifier. Optionally, the third operation is described in the embodiment of the third communication device.

It should be noted that, in a case that the AIoT service request sent by the AF does not include a second identifier, the NEF or AIoT function allocates the second identifier. In a case that the AIoT service request sent by the AF includes the second identifier, the NEF or AIoT function may use the second identifier, for example, send the second identifier to an AMF.

Step 3: The NEF or AIoT function sends at least one of matching information, a first identifier, and the second identifier to an AMF.

An implementation is shown in steps 4a and 5a, and another implementation is shown in step 5b.

Step 4a: The AMF sends an NGAP message to the access network device, where the NGAP message includes at least one of the matching information, the first identifier, and the second identifier.

Step 5a: The access network device sends an RRC message to the intermediate device, where the RRC message includes at least one of the matching information, the first identifier, and the second identifier.

Step 4b: The AMF sends a NAS message to the intermediate device, where the NAS message includes at least one of the matching information, the first identifier, and the second identifier.

Step 6: The intermediate device sends a second message to an AIoT device, where the second message carries at least one of the matching information, the first identifier, and the second identifier.

The operation execution method provided in embodiments of this application may be performed by an operation execution apparatus. In embodiments of this application, an operation execution apparatus provided in embodiments of this application is described by using an example in which the operation execution apparatus performs the operation execution method.

Refer to FIG. 11. An embodiment of this application further provides an operation execution apparatus 80, including:
an obtaining module 81, configured to obtain first information, where the first information includes at least one of the following: matching information, a first identifier, and a second identifier; and
a first execution module 82, configured to execute a first operation based on the first information.

The first operation includes at least one of the following:
selecting one or more ambient Internet of Things AIoT devices;
discovering one or more AIoT devices;
sending second information,
where
the second information includes at least one of the following: the matching information, the first identifier, and the second identifier,
where
the matching information is used for selecting or matching one or more AIoT devices;
the first identifier is used for identifying one or more AIoT devices; and
the second identifier is used for identifying at least one of the following: one or more tasks, one or more sessions, and one or more processes.

Optionally, after the sending the second information to a second communication device, the apparatus further includes:
receiving a first response sent by the second communication device, where the first response includes at least one of the following: information for identifying the AIoT device, information for indicating a matching success, and information for indicating a matching failure.

Optionally, the matching information does not include at least one of the following: a terminal identifier, the first identifier, and the second identifier.

Optionally, at least one of the first information and the second information further includes location information, where the location information is used for indicating one of the following: a location in a storage of the AIoT device and a location of the matching information or information corresponding to the matching information in the AIoT device.

Optionally, the matching information includes at least one of the following: a bit string, a character string, text, a picture, a video, audio, a tactile signal, file content, a file type, and a file identifier;
or
the location information includes at least one of the following: a storage area, a start pointer of the storage area, an end pointer of the storage area, and a length of the storage area.

Optionally, the obtaining first information includes one of the following: obtaining first information through local configuration, generating first information, and receiving a first message.

The first message includes the first information.

The first message includes at least one of the following:
a first paging message, a message different from the first paging message, a first notification message, a message different from the first notification message, and a message different from the first notification message and the first paging message.

Optionally, in a case that the first message is the first paging message or the first notification message, the first message further includes first indication information, where the first indication information is used for indicating at least one of the following: ignoring a terminal identifier in the first message.

The apparatus is further configured to execute at least one of the following based on the first indication information:
ignoring the terminal identifier in the first message;
configuring a second message not to include a terminal identifier; and
configuring the second message to include second indication information, where the second indication information is used for indicating at least one of the following: ignoring a terminal identifier in the second message.

Optionally, the sending second information includes: sending the second message, where the second message includes the second information.

The second message includes at least one of the following:
a second paging message, a message different from the second paging message, and a message of a first interface.

The first interface is an interface between a first communication device and an AIoT device.

Optionally, in a case that the second message is the second paging message, the second message further includes the second indication information, where the second indication information is used for indicating at least one of the following: ignoring the terminal identifier in the second message.

In this embodiment of this application, the first operation is executed based on the first information, and the matching information or the first identifier is used to select one or more AIoT devices or discover the selected AIoT devices, so that operations can be implemented on the one or more AIoT devices. Further, this embodiment of this application supports efficient group-based selection of one or more AIoT devices. Furthermore, this embodiment of this application can reuse existing messages (such as paging messages or notification messages) to select one or more AIoT devices, and can implement exception processing that is to be performed due to the reuse of existing messages. In addition, a problem of how to process executing, by a second reader/writer/interrogator, the same task of selecting AIoT devices can be resolved by using the second identifier.

The operation execution apparatus provided in embodiments of this application can implement the processes implemented in the method embodiment of FIG. 2, and achieve a same technical effect. To avoid repetition, details are not described herein.

The operation execution apparatus in embodiments of this application may be an electronic device, such as an electronic device having an operating system, or may be a component in an electronic device, such as an integrated circuit or a chip. The electronic device may be a terminal, or may be another device other than the terminal. For example, the terminal may include but is not limited to the above listed type of the terminal, and the another device may be a server, a network attached storage (Network Attached Storage, NAS), or the like. This is not specifically limited in embodiments of this application.

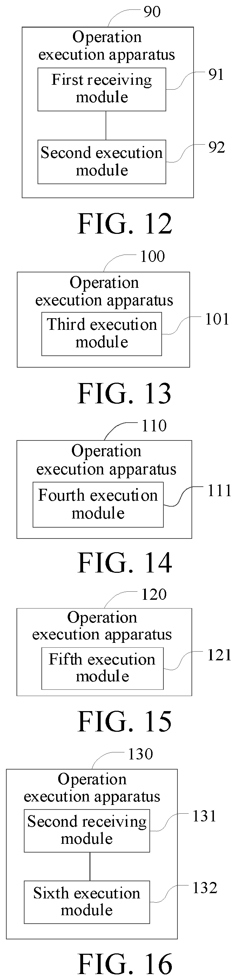

Refer to FIG. 12. An embodiment of this application further provides an operation execution apparatus 90, including:
a first receiving module 91, configured to receive second information, where the second information includes at least one of the following: matching information, a first identifier, and a second identifier; and
a second execution module 92, configured to execute a second operation based on the second information.

The second operation includes at least one of the following:
performing matching with the second information;
executing or skipping executing an AIoT service-related operation based on a success or a failure of matching with the second information; and
sending or skipping sending a first response based on a success or a failure of the matching with the second information,
where
the matching information is used for selecting or matching one or more AIoT devices;
the first identifier is used for identifying one or more AIoT devices; and
the second identifier is used for identifying at least one of the following: one or more tasks, one or more sessions, and one or more processes.

Optionally, the second information further includes location information, where the location information is used for indicating one of the following: a location in a storage of the AIoT device and a location of the matching information or information corresponding to the matching information in the AIoT device.

Optionally, the first response includes at least one of the following:
information for identifying the AIoT device; and
information for indicating a matching success or information for indicating a matching failure.

Optionally, the executing or skipping executing an AIoT service-related operation based on a success or a failure of matching with the second information includes:
executing the AIoT service-related operation in a case that the matching with the second information succeeds; or
skipping executing the AIoT service-related operation in a case that the matching with the second information fails.

Optionally, the executing an AIoT service-related operation includes at least one of the following:
waking up the second communication device or enabling the second communication device to enter an awake state;
entering a ready state for executing an AIoT operation or preparing to execute an AIoT operation;
executing an AIoT operation; and
sending at least one of the following to a first communication device: information for identifying the AIoT device, and a first response, where the first response is information for indicating a matching success.

Optionally, the entering a ready state for executing an AIoT operation or preparing to execute an AIoT operation includes at least one of the following:
enabling the second communication device to enter a state of waiting for being discovered, and enabling the second communication device to enter a state of waiting for next-step/subsequent signaling;
responding or replying to signaling of the first communication device;
executing an operation based on the signaling of the first communication device; and
executing an operation based on signaling corresponding to a task, a session, or a process corresponding to the second identifier.

Optionally, the skipping executing an AIoT service-related operation includes at least one of the following:
keeping a current state unchanged;
skipping sending or sending a first response to the first communication device, where the first response includes at least one of the following: information for identifying the AIoT device, information for indicating a matching success, and information for indicating a matching failure; and
ignoring one of the following: the signaling of the first communication device, and the signaling corresponding to the task, the session, or the process corresponding to the second identifier.

Optionally, the receiving second information includes: receiving a second message.

The second message includes at least one of the following:
a second paging message, a message different from the second paging message, and a message of a first interface.

The first interface is an interface between a reader/writer and the AIoT device.

In this embodiment of this application, the second operation is executed based on the second information, and the matching information or the first identifier is used to match one or more AIoT devices, so that operations can be implemented on the one or more AIoT devices. Further, in this embodiment of this application, the AIoT service-related operation is executed in a case that the matching succeeds, or the AIoT service-related operation is not executed in a case that the matching fails. A problem of how to process executing, by a second reader/writer/interrogator, the same task of selecting AIoT devices can be resolved by using the second identifier.

The operation execution apparatus provided in embodiments of this application can implement the processes implemented in the method embodiment of FIG. 3, and achieve a same technical effect. To avoid repetition, details are not described herein.

Refer to FIG. 13. An embodiment of this application further provides an operation execution apparatus 100, including:
a third execution module 101, configured to execute a third operation.

The third operation includes at least one of the following:
allocating a second identifier; and
sending at least one of the following: matching information, a first identifier, and a second identifier,
where
the matching information is used for selecting or matching one or more AIoT devices;
the first identifier is used for identifying one or more AIoT devices; and
the second identifier is used for identifying at least one of the following: one or more tasks, one or more sessions, and one or more processes.

Optionally, the executing a third operation includes:
obtaining, by a third communication device, third information; and
executing, by the third communication device, the third operation based on the third information.

The third information includes at least one of the following:
matching information, a first identifier, and AIoT task information.

In an optional embodiment of this application, the AIoT task is also referred to as an AIoT operation.

The AIoT task or the AIoT operation includes at least one of the following:
inventorying or discovering (or paging) one or more AIoT devices;
reading information of the one or more AIoT devices (information in an AIoT storage (for example, identification information or perceived information of the AIoT devices));
writing information to the one or more AIoT devices;
controlling the one or more AIoT devices (for example, activating and deactivating the AIoT devices); and
positioning the one or more AIoT devices.

In this embodiment of this application, the third operation is executed based on the third information (for example, allocating the second identifier based on the matching information or the first identifier), the second identifier can be allocated in a case that the third information does not include the second identifier, and the second identifier can be used in a case that the third information includes the second identifier. In this way, a problem of how to process executing, by a second reader/writer/interrogator, the same task of selecting AIoT devices can be resolved by using the second identifier.

The operation execution apparatus provided in embodiments of this application can implement the processes implemented in the method embodiment of FIG. 4, and achieve a same technical effect. To avoid repetition, details are not described herein.

Refer to FIG. 14. An embodiment of this application further provides an operation execution apparatus 110, including:
a fourth execution module 111, configured to execute a fourth operation, where the fourth operation includes at least one of the following:
sending fourth information, where the fourth information includes at least one of the following: matching information, a first identifier, a second identifier, and AIoT task information,
where
the matching information is used for selecting or matching one or more AIoT devices;
the first identifier is used for identifying one or more AIoT devices; and
the second identifier is used for identifying at least one of the following: one or more tasks, one or more sessions, and one or more processes.

In this embodiment of this application, the fourth information is sent, which can trigger selection of one or more AIoT devices or discovery of the selected AIoT devices, so that operations can be implemented on the one or more AIoT devices. Further, this embodiment of this application supports efficient group-based selection of one or more AIoT devices.

The operation execution apparatus provided in embodiments of this application can implement the processes implemented in the method embodiment of FIG. 5, and achieve a same technical effect. To avoid repetition, details are not described herein.

Refer to FIG. 15. An embodiment of this application further provides an operation execution apparatus 120, including:
a fifth execution module 121, configured to execute a fifth operation.

The fifth operation includes at least one of the following:
carrying first indication information in a first message, where the first indication information is used for indicating at least one of the following: ignoring a terminal identifier in the first message; and
sending first information,
where
the first information includes at least one of the following: matching information, a first identifier, and a second identifier,
where
the matching information is used for selecting or matching one or more AIoT devices;
the first identifier is used for identifying one or more AIoT devices; and
the second identifier is used for identifying at least one of the following: one or more tasks, one or more sessions, and one or more processes.

Optionally, that a fifth communication device executes a fifth operation includes:
the fifth communication device receives fifth information, where the fifth information includes at least one of the following: matching information, a first identifier, and a second identifier; and
the fifth communication device executes the fifth operation based on the fifth information.

Optionally, the carrying first indication information in a first message includes: carrying the first indication information in the first message in a case that a first condition is satisfied.

The first condition includes at least one of the following:
the first information is carried in the first message; and
the first message is a first paging message or a first notification message.

Optionally, the first message includes at least one of the following:
a first paging message, a message different from the first paging message, a first notification message, a message different from the first notification message, and a message different from the first notification message and the first paging message.

The operation execution apparatus provided in embodiments of this application can implement the processes implemented in the method embodiment of FIG. 6, and achieve a same technical effect. To avoid repetition, details are not described herein.

Refer to FIG. 16. An embodiment of this application further provides an operation execution apparatus 130, including:
a second receiving module 131, configured to receive first indication information, where the first indication information is used for indicating at least one of the following: ignoring a terminal identifier in the first message; and
a sixth execution module 132, configured to execute a sixth operation based on the first indication information.

The sixth operation includes at least one of the following:
ignoring the terminal identifier in the first message;
configuring a second message not to include a terminal identifier; and
configuring the second message to include received second indication information, where the second indication information is used for indicating at least one of the following: ignoring a terminal identifier in the second message.

Optionally, the first message includes at least one of the following: a first paging message and a first notification message.

Optionally, the second message includes a second paging message.

The operation execution apparatus provided in embodiments of this application can implement the processes implemented in the method embodiment of FIG. 7, and achieve a same technical effect. To avoid repetition, details are not described herein.

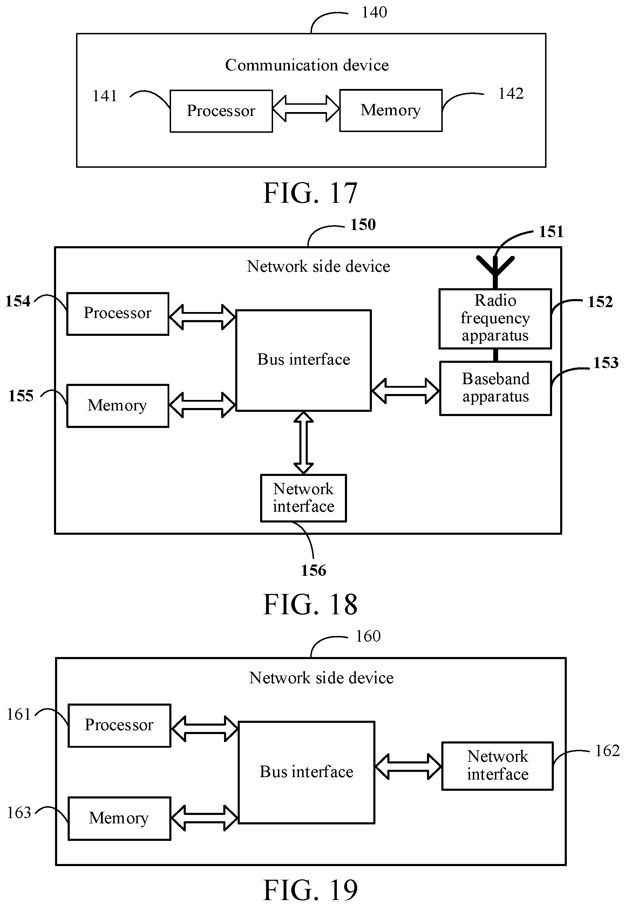

As shown in FIG. 17, an embodiment of this application further provides a communication device 140, including a processor 141 and a memory 142. The memory 142 stores a program or an instruction runnable on the processor 141. For example, when the communication device 140 is a first communication device, the program or the instruction, when executed by the processor 141, implements the steps of the embodiment of the operation execution method performed by the first communication device, and can achieve the same technical effects. When the communication device 140 is a second communication device, the program or the instruction, when executed by the processor 141, implements the steps of the embodiment of the operation execution method performed by the second communication device, and can achieve the same technical effects. When the communication device 140 is a third communication device, the program or the instruction, when executed by the processor 141, implements the steps of the embodiment of the operation execution method performed by the third communication device, and can achieve the same technical effects. When the communication device 140 is a fourth communication device, the program or the instruction, when executed by the processor 141, implements the steps of the embodiment of the operation execution method performed by the fourth communication device, and can achieve the same technical effects. To avoid repetition, details are not described herein.

Specifically, an embodiment of this application further provides a network side device. As shown in FIG. 18, the network side device 150 includes an antenna 151, a radio frequency apparatus 152, a baseband apparatus 153, a processor 154, and a memory 155. The antenna 151 is connected to the radio frequency apparatus 152. In an uplink direction, the radio frequency apparatus 152 receives information through the antenna 151, and sends the received information to the baseband apparatus 153 for processing. In a downlink direction, the baseband apparatus 153 processes to-be-sent information, and sends the processed to-be-sent information to the radio frequency apparatus 152. The radio frequency apparatus 152 processes the received information, and then sends the processed information through the antenna 151.

The method in the foregoing embodiment performed by the network side device may be implemented by the baseband apparatus 153. The baseband apparatus 153 includes a baseband processor.

The baseband apparatus 153 may include, for example, at least one baseband board. A plurality of chips are arranged on the baseband board, as shown in FIG. 18. One of the chips is, for example, a baseband processor, and is connected to the memory 155 through a bus interface to invoke a program in the memory 155 to execute the operations of the network device shown in the foregoing method embodiment.

The network side device may further include a network interface 156. The interface, for example, is a common public radio interface (Common Public Radio Interface, CPRI).

Specifically, the network side device 150 in this embodiment of this application further includes an instruction or a program stored in the memory 155 and runnable on the processor 154. The processor 154 invokes the instruction or the program in the memory 155 to perform the method performed by the modules shown in FIG. 11 or FIG. 16, and achieves the same technical effects. To avoid repetition, details are not described herein.

Specifically, an embodiment of this application further provides a network side device. As shown in FIG. 19, a network side device 160 includes a processor 161, a network interface 162, and a memory 163. The network interface 162 is, for example, a common public radio interface (common public radio interface, CPRI).

Specifically, the network side device 160 in this embodiment of this application further includes an instruction or a program stored in the memory 163 and runnable on the processor 161. The processor 161 invokes the instruction or the program in the memory 163 to perform the method performed by the modules shown in FIG. 12, FIG. 13, FIG. 14, or FIG. 15, and achieves the same technical effects. To avoid repetition, details are not described herein.

An embodiment of this application further provides a readable storage medium. The readable storage medium stores a program or an instruction. The program or the instruction, when executed by a processor, implements the processes of the embodiment of the foregoing operation execution method, and can achieve the same technical effects. To avoid repetition, details are not described herein.

The processor is a processor in the terminal in the foregoing embodiments. The readable storage medium includes a computer-readable storage medium, such as a computer read-only memory (Read-Only Memory, ROM), a random access memory (Random Access Memory, RAM), a magnetic disk, or an optical disk. In some examples, the readable storage medium may be a non-transient readable storage medium.

An embodiment of this application further provides a chip. The chip includes a processor and a communication interface. The communication interface is coupled to the processor. The processor is configured to run a program or an instruction, to implement the processes of the embodiment of the foregoing operation execution method, and can achieve the same technical effect. To avoid repetition, details are not described herein.

It should be understood that the chip mentioned in this embodiment of this application may also be referred to as a system level chip, a system chip, a chip system, a system on chip, or the like.

An embodiment of this application further provides a computer program/program product. The computer program/program product is stored in a storage medium. The computer program/program product is executed by at least one processor to implement the processes of the embodiment of the foregoing operation execution method, and can achieve the same technical effect. To avoid repetition, details are not described herein.

An embodiment of this application further provides a wireless communication system, including at least two of the following: a first communication device, a second communication device, and a third communication device. The first communication device is configured to perform the foregoing steps of the method performed by the first communication device side. The second communication device is configured to perform the steps of the foregoing method performed by the second communication device side. The third communication device is configured to perform the steps of the foregoing method performed by the third communication device side. The fourth communication device is configured to perform the steps of the foregoing method performed by the fourth communication device side. The fifth communication device may be configured to perform the steps of the foregoing method performed by the fifth communication device side. The sixth communication device may be configured to perform the steps of the foregoing method performed by the sixth communication device side.

An embodiment of this application further provides a wireless communication system, including a first communication device or a sixth communication device, and a second communication device. The first communication device is configured to perform the steps of the foregoing method performed by the first communication device side. The second communication device is configured to perform the steps of the foregoing method performed by the second communication device side. The sixth communication device is configured to perform the steps of the foregoing method performed by the sixth communication device side.

An embodiment of this application further provides a wireless communication system, including a first communication device or a sixth communication device, a second communication device, a third communication device, and a fourth communication device. The first communication device may be configured to perform the steps of the foregoing method performed by the first communication device side. The second communication device may be configured to perform the steps of the foregoing method performed by the second communication device side. The third communication device may be configured to perform the steps of the foregoing method performed by the third communication device side. The fourth communication device may be configured to perform the steps of the foregoing method performed by the fourth communication device side. The sixth communication device may be configured to perform the steps of the foregoing method performed by the sixth communication device side.

An embodiment of this application provides a wireless communication system, including a first communication device or a sixth communication device, a second communication device, a third communication device, a fourth communication device, and a fifth communication device. The first communication device may be configured to perform the steps of the foregoing method performed by the first communication device side. The second communication device may be configured to perform the steps of the foregoing method performed by the second communication device side. The third communication device may be configured to perform the steps of the foregoing method performed by the third communication device side. The fourth communication device may be configured to perform the steps of the foregoing method performed by the fourth communication device side. The fifth communication device may be configured to perform the steps of the foregoing method performed by the fifth communication device side. The sixth communication device may be configured to perform the steps of the foregoing method performed by the sixth communication device side.

It should be noted that, the term "comprise", "include", or any other variant herein is intended to encompass non-exclusive inclusion, so that a process, a method, an article, or an apparatus including a series of elements not only includes those elements, but also includes another element not listed explicitly, or includes intrinsic elements for the process, the method, the article, or the apparatus. Without any further limitation, an element defined by the phrase "include one ..." does not exclude existence of an additional same element in the process, the method, the article, or the apparatus that includes the element. In addition, it should be noted that the scope of the method and the apparatus in the implementations of this application is not limited to function execution in the order shown or discussed, and may further include function execution in a substantially simultaneous manner or in a reverse order based on the involved functions. For example, the described method may be performed in an order different from the described order, and various steps may be added, omitted, or combined. In addition, features described in combination with some examples may be combined in another example.

According to the descriptions of the foregoing implementations, a person skilled in the art may clearly understand that the methods in the foregoing embodiments may be implemented by using a computer software product and a necessary universal hardware platform, or may certainly be implemented by using hardware. The computer software product is stored in a storage medium (for example, a ROM, a RAM, a magnetic disk, or an optical disk), and includes instructions, to enable a terminal or a network side device to perform the methods described in embodiments of this application.

Although embodiments of this application are described above with reference to the drawings, this application is not limited to the foregoing specific implementations. The foregoing specific implementations are illustrative only but not restrictive. With the enlightenment of this application, a person of ordinary skill in the art may make implementations of many forms without departing from the concept of this application and the protection scope of the claims. These implementations fall within the protection of this application.

## Claims

1. An operation execution method, comprising:
obtaining, by the first communication device, first information, wherein the first information comprises at least one of the following: matching information, a first identifier, and a second identifier;
executing, by the first communication device, a first operation based on the first information, wherein
the first operation comprises at least one of the following:
selecting one or more ambient Internet of Things AIoT devices;
discovering one or more AIoT devices; and
sending second information,
wherein
the second information comprises at least one of the following: the matching information, the first identifier, and the second identifier,
wherein
the matching information is used for selecting or matching one or more AIoT devices;
the first identifier is used for identifying one or more AIoT devices; and
the second identifier is used for identifying at least one of the following: one or more tasks, one or more sessions, and one or more processes.

2. The method according to claim 1, wherein after the sending second information to a second communication device, the method further comprises:
receiving a first response sent by the second communication device, wherein the first response comprises at least one of the following: information for identifying the AIoT device, information for indicating a matching success, and information for indicating a matching failure.

3. The method according to claim 1, wherein the matching information does not comprise at least one of the following: a terminal identifier, the first identifier, and the second identifier.

4. The method according to any one of claims 1 to 3, wherein at least one of the first information and the second information further comprises location information, wherein the location information is used for indicating one of the following: a location in a storage of the AIoT device and a location of the matching information or information corresponding to the matching information in the AIoT device.

5. The method according to any one of claims 1 to 4, wherein the matching information comprises at least one of the following: a bit string, a character string, text, a picture, a video, audio, a tactile signal, file content, a file type, and a file identifier;
or
the location information comprises at least one of the following: a storage area, a start pointer of the storage area, an end pointer of the storage area, and a length of the storage area.

6. The method according to any one of claims 1 to 5, wherein the obtaining first information comprises one of the following: obtaining first information through local configuration, generating first information, and receiving a first message, wherein
the first message comprises the first information; and
the first message comprises at least one of the following:
a first paging message, a message different from the first paging message, a first notification message, a message different from the first notification message, and a message different from the first notification message and the first paging message.

7. The method according to claim 6, wherein in a case that the first message is the first paging message or the first notification message, the first message further comprises first indication information, wherein the first indication information is used for indicating at least one of the following: ignoring a terminal identifier in the first message; and
the method further comprises performing at least one of the following based on the first indication information:
ignoring the terminal identifier in the first message;
configuring a second message not to comprise a terminal identifier; and
configuring the second message to comprise second indication information, wherein the second indication information is used for indicating at least one of the following: ignoring a terminal identifier in the second message.

8. The method according to any one of claims 1 to 7, wherein the sending second information comprises: sending the second message, wherein the second message comprises the second information; and
the second message comprises at least one of the following:
a second paging message, a message different from the second paging message, and a message of a first interface, wherein
the first interface is an interface between the first communication device and the AIoT device.

9. The method according to claim 8, wherein in a case that the second message is the second paging message, the second message further comprises the second indication information, wherein the second indication information is used for indicating at least one of the following: ignoring the terminal identifier in the second message.

10. An operation execution method, comprising:
receiving, by a second communication device, second information, wherein the second information comprises at least one of the following: matching information, a first identifier, and a second identifier; and
executing, by the second communication device, a second operation based on the second information, wherein
the second operation comprises at least one of the following:
performing matching with the second information;
executing or skipping executing an AIoT service-related operation based on a success or a failure of matching with the second information; and
sending or skipping sending a first response based on a success or a failure of the matching with the second information,
wherein
the matching information is used for selecting or matching one or more AIoT devices;
the first identifier is used for identifying one or more AIoT devices; and
the second identifier is used for identifying at least one of the following: one or more tasks, one or more sessions, and one or more processes.

11. The method according to claim 10, wherein the second information further comprises location information, wherein the location information is used for indicating one of the following: a location in a storage of the AIoT device and a location of the matching information or information corresponding to the matching information in the AIoT device.

12. The method according to claim 10 or 11, wherein the first response comprises at least one of the following:
information for identifying the AIoT device; and
information for indicating a matching success or information for indicating a matching failure.

13. The method according to any one of claims 10 to 12, wherein the executing or skipping executing an AIoT service-related operation based on a success or a failure of matching with the second information comprises:
executing the AIoT service-related operation in a case that the matching with the second information succeeds; or
skipping executing the AIoT service-related operation in a case that the matching with the second information fails.

14. The method according to claim 13, wherein the executing an AIoT service-related operation comprises at least one of the following:
waking up the second communication device or enabling the second communication device to enter an awake state;
entering a ready state for executing an AIoT operation or preparing to execute an AIoT operation;
executing an AIoT operation; and
sending at least one of the following to a first communication device: information for identifying the AIoT device, and a first response, wherein the first response is information for indicating a matching success.

15. The method according to claim 14, wherein the entering a ready state for executing an AIoT operation or preparing to execute an AIoT operation comprises at least one of the following:
enabling the second communication device to enter a state of waiting for being discovered, and enabling the second communication device to enter a state of waiting for next-step/subsequent signaling;
responding or replying to signaling of the first communication device;
executing an operation based on the signaling of the first communication device; and
executing an operation based on signaling corresponding to a task, a session, or a process corresponding to the second identifier.

16. The method according to any one of claims 10 to 15, wherein the skipping executing an AIoT service-related operation comprises at least one of the following:
keeping a current state unchanged;
skipping sending or sending a first response to the first communication device, wherein the first response comprises at least one of the following: information for identifying the AIoT device, information for indicating a matching success, and information for indicating a matching failure; and
ignoring one of the following: the signaling of the first communication device, and the signaling corresponding to the task, the session, or the process corresponding to the second identifier.

17. The method according to any one of claims 10 to 16, wherein the receiving second information comprises: receiving a second message, wherein
the second message comprises at least one of the following:
a second paging message, a message different from the second paging message, and a message of a first interface, wherein
the first interface is an interface between a reader/writer and the AIoT device.

18. An operation execution method, comprising:
executing, by a third communication device, a third operation, wherein
the third operation comprises at least one of the following:
allocating a second identifier; and
sending at least one of the following: matching information, a first identifier, and a second identifier,
wherein
the matching information is used for selecting or matching one or more AIoT devices;
the first identifier is used for identifying one or more AIoT devices; and
the second identifier is used for identifying at least one of the following: one or more tasks, one or more sessions, and one or more processes.

19. The method according to claim 18, wherein the executing a third operation comprises:
obtaining, by the third communication device, third information; and
executing, by the third communication device, the third operation based on the third information, wherein
the third information comprises at least one of the following:
matching information, a first identifier, and AIoT task information.

20. The method according to claim 18 or 19, wherein the executing a third operation comprises:
allocating, by the third communication device, the second identifier in a case that the third information does not comprise the second identifier; or
using, by the third communication device, the second identifier in a case that the third information comprises the second identifier.

21. An operation execution method, comprising:
executing, by a fourth communication device, a fourth operation, wherein the fourth operation comprises at least one of the following:
sending fourth information, wherein the fourth information comprises at least one of the following: matching information, a first identifier, a second identifier, and AIoT task information,
wherein
the matching information is used for selecting or matching one or more AIoT devices;
the first identifier is used for identifying one or more AIoT devices; and
the second identifier is used for identifying at least one of the following: one or more tasks, one or more sessions, and one or more processes.

22. An operation execution method, comprising:
executing, by a fifth communication, a fifth operation, wherein
the fifth operation comprises at least one of the following:
carrying first indication information in a first message, wherein the first indication information is used for indicating at least one of the following: ignoring a terminal identifier in the first message; and
sending first information,
wherein
the first information comprises at least one of the following: matching information, a first identifier, and a second identifier,
wherein
the matching information is used for selecting or matching one or more AIoT devices;
the first identifier is used for identifying one or more AIoT devices; and
the second identifier is used for identifying at least one of the following: one or more tasks, one or more sessions, and one or more processes.

23. The method according to claim 22, wherein the executing, by a fifth communication, a fifth operation comprises:
receiving, by the fifth communication device, fifth information, wherein the fifth information comprises at least one of the following: matching information, a first identifier, and a second identifier; and
executing, by the fifth communication device, the fifth operation based on the fifth information.

24. The method according to claim 22 or 23, wherein the carrying first indication information in a first message comprises: carrying the first indication information in the first message in a case that a first condition is satisfied, wherein
the first condition comprises at least one of the following:
the first information is carried in the first message; and
the first message is a first paging message or a first notification message.

25. The method according to any one of claims 22 to 24, wherein the first message comprises at least one of the following:
a first paging message, a message different from the first paging message, a first notification message, a message different from the first notification message, and a message different from the first notification message and the first paging message.

26. An operation execution method, comprising:
receiving, by a sixth communication device, first indication information, wherein the first indication information is used for indicating at least one of the following: ignoring a terminal identifier in the first message; and
executing, by the sixth communication device, a sixth operation based on the first indication information, wherein
the sixth operation comprises at least one of the following:
ignoring the terminal identifier in the first message;
configuring a second message not to comprise a terminal identifier; and
configuring the second message to comprise received second indication information, wherein the second indication information is used for indicating at least one of the following: ignoring a terminal identifier in the second message.

27. The method according to claim 26, wherein the first message comprises at least one of the following: a first paging message and a first notification message.

28. The method according to claim 26 or 27, wherein the second message comprises a second paging message.

29. An operation execution apparatus, comprising:
an obtaining module, configured to obtain first information, wherein the first information comprises at least one of the following: matching information, a first identifier, and a second identifier; and
a first execution module, configured to execute a first operation based on the first information, wherein
the first operation comprises at least one of the following:
selecting one or more ambient Internet of Things AIoT devices;
discovering one or more AIoT devices; and
sending second information,
wherein
the second information comprises at least one of the following: the matching information, the first identifier, and the second identifier,
wherein
the matching information is used for selecting or matching one or more AIoT devices;
the first identifier is used for identifying one or more AIoT devices; and
the second identifier is used for identifying at least one of the following: one or more tasks, one or more sessions, and one or more processes.

30. An operation execution apparatus, comprising:
a first receiving module, configured to receive second information, wherein the second information comprises at least one of the following: matching information, a first identifier, and a second identifier; and
a second execution module, configured to execute a second operation based on the second information, wherein
the second operation comprises at least one of the following:
performing matching with the second information;
executing or skipping executing an AIoT service-related operation based on a success or a failure of matching with the second information; and
sending or skipping sending a first response based on a success or a failure of the matching with the second information,
wherein
the matching information is used for selecting or matching one or more AIoT devices;
the first identifier is used for identifying one or more AIoT devices; and
the second identifier is used for identifying at least one of the following: one or more tasks, one or more sessions, and one or more processes.

31. An operation execution apparatus, comprising:
a third execution module, configured to execute a third operation, wherein
the third operation comprises at least one of the following:
allocating a second identifier; and
sending at least one of the following: matching information, a first identifier, and a second identifier,
wherein
the matching information is used for selecting or matching one or more AIoT devices;
the first identifier is used for identifying one or more AIoT devices; and
the second identifier is used for identifying at least one of the following: one or more tasks, one or more sessions, and one or more processes.

32. An operation execution apparatus, comprising:
a fourth execution module, configured to execute a fourth operation, wherein the fourth operation comprises at least one of the following:
sending fourth information, wherein the fourth information comprises at least one of the following: matching information, a first identifier, a second identifier, and AIoT task information,
wherein
the matching information is used for selecting or matching one or more AIoT devices;
the first identifier is used for identifying one or more AIoT devices; and
the second identifier is used for identifying at least one of the following: one or more tasks, one or more sessions, and one or more processes.

33. An operation execution apparatus, comprising:
a fifth execution module, configured to execute a fifth operation, wherein
the fifth operation comprises at least one of the following:
carrying first indication information in a first message, wherein the first indication information is used for indicating at least one of the following: ignoring a terminal identifier in the first message; and
sending first information,
wherein
the first information comprises at least one of the following: matching information, a first identifier, and a second identifier,
wherein
the matching information is used for selecting or matching one or more AIoT devices;
the first identifier is used for identifying one or more AIoT devices; and
the second identifier is used for identifying at least one of the following: one or more tasks, one or more sessions, and one or more processes.

34. An operation execution apparatus, comprising:
a second receiving module, configured to receive first indication information, wherein the first indication information is used for indicating at least one of the following: ignoring a terminal identifier in the first message; and
a sixth execution module, configured to execute a sixth operation based on the first indication information, wherein
the sixth operation comprises at least one of the following:
ignoring the terminal identifier in the first message;
configuring a second message not to comprise a terminal identifier; and
configuring the second message to comprise received second indication information, wherein the second indication information is used for indicating at least one of the following: ignoring a terminal identifier in the second message.

35. A communication device, comprising a processor and a memory, wherein the memory stores a program or an instruction runnable on the processor, and the program or the instruction, when executed by the processor, implements the steps of the operation execution method according to any one of claims 1 to 9, or the program or the instruction, when executed by the processor, implements the steps of the operation execution method according to any one of claims 10 to 17, or the program or the instruction, when executed by the processor, implements the steps of the operation execution method according to any one of claims 18 to 20, or the program or the instruction, when executed by the processor, implements the steps of the operation execution method according to claim 21, or the program or the instruction, when executed by the processor, implements the steps of the operation execution method according to any one of claims 22 to 25, or the program or the instruction, when executed by the processor, implements the steps of the operation execution method according to any one of claims 26 to 28.

36. A readable storage medium, storing a program or an instruction, wherein the program or the instruction, when executed by a processor, implements the steps of the operation execution method according to any one of claims 1 to 9, or the program or the instruction, when executed by the processor, implements the steps of the operation execution method according to any one of claims 10 to 17, or the program or the instruction, when executed by the processor, implements the steps of the operation execution method according to any one of claims 18 to 20, or the program or the instruction, when executed by the processor, implements the steps of the operation execution method according to claim 21, or the program or the instruction, when executed by the processor, implements the steps of the operation execution method according to any one of claims 22 to 25, or the program or the instruction, when executed by the processor, implements the steps of the operation execution method according to any one of claims 26 to 28.
